# EUROPÄISCHE PATENTSCHRIFT

(11) **EP 3 105 083 B1**
(45) Veröffentlichungstag und Bekanntmachung des Hinweises auf die Patenterteilung: **20.09.2017**
(21) Anmeldenummer: 15707261.2
(22) Anmeldetag: 11.02.2015
(51) Int. Cl.: B60R 11/04

(54) **KAMERAVORRICHTUNG MIT ZUSATZFUNKTION**
CAMERA DEVICE WITH AUXILIARY FUNCTION
DISPOSITIF DE CAMÉRA PRÉSENTANT UNE FONCTION SUPPLÉMENTAIRE

(30) Priorität: 11.02.2014 DE 102014101689
(43) Veröffentlichungstag der Anmeldung: 21.12.2016
(73) Patentinhaber: Huf Hülsbeck & Fürst GmbH & Co. KG, 42551 Velbert (DE)
(72) Erfinder: BUSS, Wolfgang, 42697 Solingen (DE)
(86) Internationale Anmeldenummer: PCT/DE2015/100057
(87) Internationale Veröffentlichungsnummer: WO 2015/120842

(56) Entgegenhaltungen:
- EP-B1- 2 076 408
- DE-A1-102006 039 192
- DE-A1-102008 010 966

## Beschreibung

Die vorliegende Erfindung ist auf eine Kameravorrichtung, insbesondere für den Heckbereich bei einem Fahrzeug gemäß des Oberbegriffes von Anspruch 1 gerichtet. Bei derartigen Kameravorrichtungen ist ein Antrieb, der über Getriebemittel mit einem Schlitten in Wirkverbindung steht, vorgesehen, wobei der Schlitten eine Kamera mechanisch fixiert. Des Weiteren ist der Schlitten gemeinsam mit der Kamera zumindest zwischen einer Ruheposition und einer Aufnahmeposition entlang einer Bewegungsrichtung durch den Antrieb bewegbar. Ferner weist die Kameravorrichtung ein Gehäuse auf, in dem der Schlitten über zumindest eine Führung wenigstens teilweise beweglich angeordnet ist, und einen bewegbaren Deckel, wodurch eine Öffnung im Gehäuse für die Kamera in einer Schließstellung des Deckels verschließbar ist, wenn die Kamera ihre Ruheposition einnimmt. Zusätzlich ist ein Schaltelement bei der Kameravorrichtung vorgesehen, wodurch ein Signal für eine fahrzeugspezifische Funktion auslösbar ist,

Aus dem Stand der Technik ist z. B. die Druckschrift DE 10 2009 008 283 A1 bekannt, bei der ebenfalls eine Kameravorrichtung erwähnt wird, wobei jedoch die Kamera starr an der Kameravorrichtung angeordnet ist. Zum Schutz einer Linse der Kamera ist ein bewegliches Deckelelement vorgesehen, welches zwischen einer Schließstellung und Öffnungsstellung hin und her bewegbar ist. In der Schließstellung schützt das Deckelelement zumindest die Linse der Kamera vor Umwelteinflüssen. Zusätzlich ist bei der Kameravorrichtung auch eine Betätigungseinheit vorgesehen, um eine fahrzeugseitige Funktion, wie z. B. das Öffnen einer Heckklappe am Fahrzeug, auslösen zu können. Wie aus der zuvor erwähnten Druckschrift hervorgeht, benötigt die offenbarte Kameravorrichtung mit der Betätigungseinheit einen nennenswerten Bauraum, um am Fahrzeug untergebracht werden zu können. Insbesondere benötigt die entsprechende Kameravorrichtung eine deutliche Bautiefe (Bauraumtiefe) und Bauraumbreite, um den Antriebsmechanismus für das bewegliche Deckelelement sowie die entsprechende Kamera und die Betätigungseinheit unterbringen zu können.
Darüber hinaus sind aus dem Stand der Technik auch Kameravorrichtungen bekannt, die die Kamera beweglich aufnehmen. Bei derartigen Kameravorrichtungen, wie z. B. aus der Druckschrift DE 10 2009 015 610 A1 benötigt jedoch der vorhandene Schwenkmechanismus für die Kamera einen zusätzlichen Platzbedarf, so dass derartige Vorrichtungen ebenfalls über einen deutlichen Bauraum mit entsprechender Bauraumtiefe verfügen. Die in der zuvor genannten Druckschrift offenbarte Kameravorrichtung ist jedoch nicht mit einer zusätzlichen Betätigungseinheit ausgestattet, um eine fahrzeugseitige Funktion, wie z. B. das Öffnen einer Heckklappe am Fahrzeug, auslösen zu können. Aus dem Dokument DE10 2006 039 192 A1 ist eine Kameravorrichtung nach dem Oberbegriff des Anspruchs 1 bekannt.

Aufgabe der vorliegenden Erfindung ist es somit, eine Kameravorrichtung zu schaffen, bei der zumindest einige der genannten Nachteile aus dem Stand der Technik überwunden werden. Insbesondere ist es eine Aufgabe der vorliegenden Erfindung, eine Kameravorrichtung zu schaffen, die eine geringe Bauraumbreite und ggf. Bauraumtiefe sowie vorteilhafter Weise insgesamt eine kompakte Bauform aufweist. Darüber hinaus ist es eine weitere Aufgabe der vorliegenden Erfindung eine besonders funktionelle Kameravorrichtung bereitzustellen, mit der eben nicht nur Bilddaten an die fahrzeugseitigen Informationssysteme weitergeleitet werden können, sondern zusätzliche Funktionalitäten vorhanden sind. Ferner ist es insbesondere eine Aufgabe der Erfindung eine derartige Kameravorrichtung mit wenigen Bauteilen bereitzustellen.
Die vorliegende Aufgabe wird durch eine Kameravorrichtung, insbesondere für einen Heckbereich eines Fahrzeugs, mit den Merkmalen des Anspruchs 1 gelöst. In den abhängigen Ansprüchen sind bevorzugte Weiterbildungen der Erfindung aufgeführt, deren besondere Bedeutung nachfolgend näher erläutert wird.
Die in Rede stehende Kameravorrichtung ist mit einem Antrieb, der über Getriebemittel mit einem Schlitten in Wirkverbindung steht, ausgestattet, wobei der Schlitten eine Kamera mechanisch aufnimmt. Derartige Kameravorrichtungen können insbesondere bei Fahrzeugen und hier insbesondere im Heckbereich eingesetzt werden. Folglich ist die vorliegende Erfindung auch auf eine KFZ-Kameravorrichtung gerichtet. Des Weiteren ist bei der Kameravorrichtung der Schlitten gemeinsam mit der Kamera zumindest zwischen einer Ruheposition und einer Aufnahmeposition entlang einer Bewegungsrichtung durch den Antrieb bewegbar. In der Ruheposition ist die Kamera in der Regel in die Kameravorrichtung hineingezogen und geschützt untergebracht, wobei die Kamera keine Bilddaten erfasst. In der Aufnahmeposition hingegen ragt die Kamera zumindest teilweise aus einer Öffnung der Kameravorrichtung heraus, um Bilddaten zu erfassen und diese weiterzugeben, insbesondere an Informationssysteme bei dem Kraftfahrzeug. Zweckmäßigerweise kann die Kamera mit einem Kamerakabel verbunden sein, um vorhandene Bilddaten weiterleiten zu können. Die Kameravorrichtung weist ferner ein Gehäuse auf, in dem der Schlitten über zumindest eine Führung wenigstens teilweise beweglich angeordnet ist. Ferner ist ein bewegbarer Deckel vorgesehen, wodurch eine Öffnung im Gehäuse in einer Schließstellung des Deckels verschließbar ist, wenn die Kamera ihre Ruheposition einnimmt. Die entsprechende Öffnung im Gehäuse ist für die Kamera vorgesehen, wenn sie ihre Aufnahmeposition einnimmt und somit zumindest teilweise durch die Öffnung im Gehäuse ragt oder die Bilderfassung vornimmt. Zusätzlich ist zumindest ein Schaltelement an der Kameravorrichtung vorhanden, wodurch ein Signal für eine fahrzeugspezifische Funktion auslösbar ist. Dieses fahrzeugspezifische Funktion kann insbesondere manuell durch einen Bediener von außen am Fahrzeug ausgelöst werden. Hierbei kann es sich z. B. um ein Öffnungssignal für die Heckklappe eines Fahrzeugs oder eine Weckfunktion vom Fahrzeug handeln. Erfindungsgemäß ist bei der Kameravorrichtung vorgesehen, dass in der Schließstellung des Deckels ein manueller Druck (insbesondere von außen) auf den Deckel eine Bewegung des Schlittens mit der Kamera verursacht. Durch diesen Druck auf den Deckel wird der Schlitten mit der Kamera von ihrer Ruheposition in eine Zusatzposition überführt und hierdurch das Schaltelement betätigt, um das Signal für eine fahrzeugspezifische Funktion auszulösen. Damit wird bei der erfindungsgemäßen Kameravorrichtung auf ein zusätzliches Betätigungselement zum Auslösen der fahrzeugspezifischen Funktion verzichtet, da der Deckel ein integriertes Betätigungselement darstellt, um die fahrzeugspezifische Funktion auslösen zu können. Damit kann auch die Bauraumbreite der erfindungsgemäßen Kameravorrichtung mit einer verschiebbaren Kamera deutlich reduziert werden. Da die Kamera bei der erfindungsgemäßen Kameravorrichtung nicht starr angeordnet ist, sondern bewegbar zwischen der Ruheposition und der Aufnahmeposition, weist sie den Vorteil auf, dass die Kamera in ihrer Aufnahmeposition den optischen Bilderfassungsbereich optimal erfassen kann. Dieses ist gerade bei schwierigen Bildaufnahmesituationen von großem Vorteil, wenn z. B. niedrige Objekte hinter dem Fahrzeug, wie z. B. hohe Bordsteinkanten oder niedrige Poller, optisch noch erfasst werden müssen. Durch die reduzierte Anzahl der Bauteile kann auch insgesamt eine besonders langlebige Konstruktion der erfindungsgemäßen Kameravorrichtung erzielt werden.

Im Rahmen der Erfindung ist es ferner denkbar, dass das Schaltelement am Gehäuse angeordnet ist, und zumindest teilweise in den Verfahrweg des Schlittens hineinragt. Hierbei weist der Schlitten ein Auslöseelement auf, das insbesondere bei einer Bewegung des Schlittens mit der Kamera in Richtung einer Zusatzposition das Schaltelement auslöst. Somit wirkt der Schlitten mit der integrierten Kamera direkt auf das Schaltelement, so dass auf ein manuelles Betätigungselement für das Schaltelement verzichtet werden kann. Außerdem kann das Schaltelement somit weit von der Öffnung des Gehäuses entfernt angebracht werden, wodurch zuverlässig ein Schutz des Schaltelements vor äußeren Umwelteinflüssen gewährleistet werden kann.

Des Weiteren ist es erfindungsgemäß denkbar, dass das Schaltelement durch einen Taster gebildet ist, der insbesondere eine Schaltfahne als Betätigungsmittel aufweist, das beim Auslösevorgang durch das Auslöseelement am Schlitten betätigbar ist. Ein derartiges Schaltelement erzeugt ein Signal, sobald die Schaltfahne mechanisch durch das Auslöseelement am Schlitten bewegt wird. Somit kann auch nur ein geringer Auslöseweg des Schlittens mit der Kamera zuverlässig vom Schaltelement messtechnisch wahrgenommen werden. Somit kann der Verfahrweg des Schlittens zwischen der Ruheposition und der Zusatzposition auf wenige Millimeter beschränkt werden, um trotzdem ein sicheres Schaltsignal am Schaltelement erzeugen zu können. Idealerweise ist der Auslöseweg zwischen Ruheposition und Zusatzposition < 8 mm, insbesondere < 5 mm und insbesondere < 3 mm. außerdem weist das als Taster ausgebildete Schaltelement eine optische Rückmeldung an den Bediener aus, da der Schaltpunkt von dem Taster spürbar ist. Gleichzeitig ist es denkbar, dass auch der Auslösevorgang akustisch als ein Klicken für den Bediener der Kameravorrichtung wahrnehmbar ist.

Ferner ist es bei der Erfindung möglich, dass das Schaltelement außenseitig am Gehäuse befestigt ist und das Betätigungsmittel in einen Innenraum des Gehäuses hineinragt, um mit dem Auslöseelement am Schlitten beim Auslösevorgang zusammenzuwirken. Somit kann das Schaltelement besonders geschützt an der Kameravorrichtung und zwar bspw. innerhalb einer Kraftfahrzeugkarosserie, Heckklappe, Tür oder dergleichen, angebracht werden, wobei nur das Betätigungsmittel vom Schaltelement in den eventuell kritischen Innenraum des Gehäuses hinein ragt. Dieser Innenraum des Gehäuses kann bei einem geöffneten Deckel verschmutzen, da die Öffnung in einer Offenstellung des Deckels nicht vollständig von der Kamera in ihrer Ausfahrposition verschlossen ist. Aus diesem Grund ist es zusätzlich vorgesehen, die Kamera am bzw. im Schlitten umhüllt anzubringen, worauf nachfolgend noch näher eingegangen wird. Außerdem ist es denkbar, dass auch die Öffnung des Gehäuses für die Kamera durch eine zusätzliche Dichtung derart verschlossen ist, dass sie den Spalt zwischen dem Schlitten bzw. der Kamera und dem Öffnungsrand des Gehäuses in der Ausfahrposition der Kamera abdichtet.

Ferner ist es bei der erfindungsgemäßen Kameravorrichtung möglich, dass das Gehäuse feststehend ist und der Schlitten für die Kamera darin hin und her bewegbar zwischen seiner Aufnahmeposition, Ruheposition sowie Zusatzposition bewegbar ist.

Bei der Erfindung ist es ferner denkbar, dass der Schlitten, der zur Aufnahme der Kamera dient, zumindest zweiteilig, insbesondere mit einem ersten und einem zweiten Schlittenteil ausgebildet ist. Dabei kann der Schlitten insbesondere eine Umhüllung oder Ummantelung für die Kamera darstellen, um diese geschützt vor Umwelteinflüssen in dem Schlitten aufzunehmen. Zu diesem Zweck weist die Umhüllung zumindest zwei Öffnungen für die Kamera auf, nämlich eine Linsen-Öffnung für die Linsen der Kamera und eine Kabel-Öffnung für das Kamerakabel, welches aus der Umhüllung bzw. dem Schlitten herausgeführt werden muss. Um die Kamera besonders einfach in den Schlitten befestigt zu bekommen, sind zumindest zwei Schlittenteile vorgesehen, die zur Montage der Kamera baulich voneinander trennbar sind.

Ferner kann es erfindungsgemäß vorgesehen sein, dass zwischen Kamera und Schlitten Dichtelemente angeordnet sind, wodurch die Kamera insbesondere wasserdicht umhüllt ist. Dabei kann ein Dichtelement um die Linse der Kamera angeordnet sein und/oder ein weiteres Dichtelement um das Kamerakabel. Idealerweise werden die zuvor erwähnten Dichtelemente leicht gegen den Schlitten gepresst, um somit die gewünschte Abdichtung und den gewünschten Schutz vor äußeren Umwelteinflüssen erhalten zu können.

Ferner ist es erfindungsgemäß denkbar, dass die Kamera über zumindest ein Haltemittel an dem Schlitten befestigt ist. Bevorzugt können zumindest zwei Haltemittel vorgesehen sein, um die Kamera insbesondere innenseitig an dem ersten Schlittenteil zu fixieren. Das erste Schlittenteil weist gleichzeitig die bereits erwähnte Linsen-Öffnung für die Kamera auf. Innenseitig ist an dem Schlittenteil auch eine mechanische Aufnahme für die Kamera denkbar, die im Wesentlichen geometrisch komplementär zum Kameragehäuse, insbesondere im Linsenbereich ausgestaltet ist. Durch diese mechanische Aufnahme kann eine ordnungsgemäße Positionierung der Kamera innerhalb des Schlittens sichergestellt werden, so dass eine Fehlmontage ausgeschlossen werden kann. Außerdem erleichtert die mechanische Aufnahme, die insbesondere an der Innenseite des ersten Schlittenteils im Bereich der Öffnung für die Kameralinse vorgesehen ist, die Montage der Kamera am Schlitten. Um die Kamera letztendlich sicher am bzw. im Schlitten zu halten, sind die bereits erwähnten Haltemittel vorgesehen. Hierbei kann es sich um Rast- und/oder Clipsverbindungen handeln, die mit dem Kameragehäuse eine formschlüssige Verbindung bilden. Ebenfalls ist es denkbar, dass die Haltemittel in Form von Schrauben ausgebildet sind, um die Kamera besonders zuverlässig form- und auch ggf. kraftschlüssig am Schlitten zu befestigen. Hierdurch kann auch der notwendige Druck für das bzw. die Dichtungselemente zwischen Kamera und Schlitten erzeugt werden. Zweckmäßigerweise werden zumindest zwei Haltemittel verwendet, um einen gleichmäßigen Druck von der Kamera auf das Dichtungselement im Bereich der Linse ausüben zu können. Hierfür können an der Kamera bzw. dem Kameragehäuse zumindest zwei Durchbrüche vorgesehen sein, die mit den Haltemitteln mechanisch zusammenwirken. Sofern es sich bei den Haltemitteln um Schrauben oder Nieten handelt, können diese durch die Durchbrüche der Kamera bis zum Schlittenteil durchgeführt werden. Haltemittel in Form von Schrauben können direkt mit dem Schlittenteil verschraubt werden. Haltemittel in Form von Nieten können direkt an einem Ende mit dem Schlittenteil stoffschlüssig verbunden sein und durch die Durchbrüche der Kamera am anderen Ende ragen, an dem die Nieten umgebördelt werden. Bei Kunststoffnieten, kann die Umbördelung der Nieten durch kurze Wärmeeinwirkung bei gleichzeitigem Druck erzielt werden. Idealerweise sind die beiden Haltemittel auf unterschiedlichen Höhen angeordnet. Unter den unterschiedlichen Höhen wird ein unterschiedlicher Abstand des jeweiligen Haltemittels zu einer gedachten Horizontalen der Kamera verstanden. Damit kann einerseits gewährleistet werden, dass eine Fehlmontage der Kamera sicher vermieden wird, da es nur eine Einbaustellung für die Kamera am Schlitten gibt, in der die Haltemittel wirksam die Kamera halten. Andererseits kann eine erhöhte Kippstabilität der Kamera am Schlitten erreicht werden, wodurch eine besonders sichere Anordnung realisiert wird.

Um die Montage der erfindungsgemäßen Kameravorrichtung weiter zu verbessern, kann es vorgesehen sein, dass die Schlittenteile über Verbindungsmittel, insbesondere Rastverbindungen, miteinander verbunden sind. Somit müssen quasi die beiden Schlittenteile nach der Montage der Kamera nur aneinander gepresst werden, wodurch die Rastverbindungen die beiden Schlittenteile formschlüssig miteinander verbinden. Anstelle der zuvor erwähnten Rastverbindung als Verbindungsmittel können selbstverständlich auch Schraubverbindungen vorgesehen sein, die ein Öffnen des Schlittens für Wartungsarbeiten an der Kamera besonders einfach machen. Um die zum Schlitten zusammengefügten Schlittenteile besonders gegen mechanische Belastungen zu schützen, können insbesondere zwei oder mehrere Verbindungsteile, vorzugsweise oberhalb und unterhalb des Kameraanschlusses vorgesehen sein. Hierdurch wird es möglich, ebenfalls das Dichtungselement, welches für das Kamerakabel zuständig ist, durch die Schlittenteile einzuklemmen und einen entsprechenden Druck und damit eine Abdichtung zu erreichen.

Des Weiteren ist es im Rahmen der Erfindung denkbar, dass die verbundenen Schlittenteile eine geschlossene Schnittlinie bilden, so dass bis auf die Kabel-Öffnung für das Kamerakabel die Schlittenteile berührend an der Schnittlinie aneinander liegen. Zweckmäßigerweise verläuft die Schnittlinie im Bereich der Kabel-Öffnung, um diese zu öffnen und die Kamera mit dem Kamerakabel einfach montieren zu können. Ansonsten müsste das Kamerakabel durch die geschlossene Kabel-Öffnung gefädelt werden, um anschließend mit der Kamera verbunden werden zu können. Hierdurch würde die Montage der Kamera deutlich erschwert werden. Somit ist es besonders zweckmäßig, die gewünschte Schnittlinie durch die Öffnung für das Kamerakabel verlaufen zu lassen. Zusätzlich ist es denkbar, dass die Schnittlinie gestuft bzw. mit Absätzen ausgestaltet ist, um eine Labyrinthdichtung zwischen den aneinander liegenden Schlittenteilen zu bilden. Um die Montage der Kamera weiter zu vereinfachen, ist es von Vorteil, wenn die vorhandene Schnittlinie nicht in einer einheitlichen Schnittebene liegt, wodurch gleichmäßige, dosenartige Vertiefungen mit einem einheitlichen Rand vermieden werden. Gerade durch eine Absenkung der Schnittlinie im Bereich der Haltemittel für die Kamera kann die Montage deutlich verbessert werden. Selbstverständlich müssen die zu verbindenden Schlittenteile entsprechend geometrisch mit ihrer Kontur aufeinander angepasst werden.

Bei der erfindungsgemäßen Kameravorrichtung ist es optional denkbar, dass das Kamerakabel über einen Stecker, insbesondere mit Rast- oder Clipsverbindung mit der Kamera verbindbar ist. Somit kann die Kamera zunächst an dem einen Schlittenteil über die vorzugsweise vorgesehenen Haltemittel montiert werden und dann das Kamerakabel an den seitlich angeordneten Kameraanschluss angesteckt werden. Um diese Verbindung möglichst einfach und elektromechanisch sicher auszugestalten, kann eine zusätzliche Rast- oder Clipsverbindung vorgesehen sein. Somit lässt sich der Stecker des Kamerakabels form- und/oder kraftschlüssig mit dem Kameraanschluss verbinden. Damit ist auch sichergestellt, dass mechanische Belastungen nicht zu einem Lösen der Steckerverbindung führen. Außerdem kann die Rast- oder Clipsverbindung selbstständig beim Aufstecken des Steckers auf den seitlichen Kabelanschluss verriegeln.

Zusätzlich ist es bei der Erfindung möglich, dass das Kamerakabel durch eine Tülle, durch die Kabel-Öffnung im Schlitten zur Kamera führbar ist. Diese Tülle kann gleichzeitig als Knickschutztülle, Dichtungshülle und/oder Zugentlastung ausgestaltet sein. Damit kann das Kamerakabel abgedichtet und mechanisch fixiert durch die Kabel-Öffnung zum Schlitten durchgeführt werden. Außerdem kann verhindert werden, dass das Kabel im Bereich der Öffnung vom Schlitten bricht. Besonders vorteilhaft hat es sich herausgestellt, wenn die Tülle mit dem Kamerakabel stoffschlüssig verbunden ist. Auch ist es denkbar, dass die Tülle einteilig mit dem Stecker des Kamerakabels ausgestaltet ist. Somit kann der Kabelstecker mit der Tülle ein gemeinsames integrales Bauelement vom Kamerakabel bilden.

Erfindungsgemäß ist es bei der Kameravorrichtung vorgesehen, dass der Schlitten über zumindest eine Führung in einem Gehäuse beweglich angeordnet ist. Dieses Gehäuse dient zur Aufnahme und Lagerung des Schlittens mit der Kamera und Teilen der Getriebemittel, die vom Antrieb betätigt werden. Der Antrieb selbst kann ebenfalls in dem Gehäuse angeordnet werden oder seitlich neben diesem Gehäuse. Das Gehäuse selbst kann feststehend an der Kameravorrichtung angeordnet sein, und innerhalb des Gehäuses kann der Schlitten bewegbar vorgesehen sein. Um die Kamera in der Kameravorrichtung möglichst widerstandsfrei zwischen der Ruheposition und der Aufnahmeposition hin und her verfahren zu können, ist eine oder mehrere Führungen vorgesehen. Vorzugsweise sind zumindest zwei Führungen in dem Gehäuse angeordnet, um somit ein Verklemmen des Schlittens bei der Bewegung zu vermeiden. Zweckmäßigerweise kann die erwähnte Führung als geschlossene Führung ausgestaltet sein, so dass es für den Schlitten nur möglich ist, sich in der vorgegebenen Führung zwischen der Ruheposition und der Aufnahmeposition hin und her zu bewegen. Ebenfalls kann die Bewegungsrichtung vom Schlitten mit der Kamera ausschließlich linear ausgestaltet sein. Damit sind auch die entsprechenden Führungen zwischen Schlitten und Kameragehäuse ebenfalls als Linearführungen ausgestaltet. Üblicherweise kann eine einfache Kinematik zum Einsatz der linearen Führung verwendet werden, so dass die entsprechende Kameravorrichtung besonders einfach und kompakt aufgebaut werden kann.

Erfindungsgemäß ist es ferner denkbar, dass der Schlitten über zwei Führungen am Gehäuse beweglich gelagert ist. Hierbei können die vorhandenen Führungen im unteren Bereich, insbesondere jeweils seitlich am Schlitten angeordnet sein. Damit bewegt sich der Schlitten links- und rechtsseitig auf den beiden Führungen im Gehäuse zwischen der Ruheposition und der Aufnahmeposition hin und her. Idealerweise sind die beiden Führungen beabstandet voneinander angeordnet, insbesondere über die Breite des Schlittens, um ein Verkanten des beweglichen Schlittens im Gehäuse zu vermeiden. Die beiden erwähnten Führungen können insbesondere nur am ersten Schlittenteil und zwar am äußeren unteren Bereich angeordnet sein. Unter dem unteren Bereich versteht man einen Bereich, der unterhalb der Kameralinse angeordnet ist. Zweckmäßigerweise liegt quasi der Schlitten auf den beiden Führungen vom Gehäuse und gleitet darauf entlang. Hierbei ist es denkbar, dass die beiden Führungen am Schlitten stegförmige Führungsmittel aufweisen, die vorzugsweise mit Gleitpuffern versehen sind. Um den Verschleiß sowie eine mögliche Geräuschentwicklung durch die Hin- und Herbewegung des Schlittens mit Kamera in dem Gehäuse zu vermeiden, sind die erwähnten Gleitpuffer, insbesondere aus Thermoplasten der Werkstoffgruppe Polyoxymethylen/Polyacetal, wie z. B. POM-Material, vorzugsweise einzusetzen. Diese Gleitpuffer können quasi über die stegförmigen Führungsmittel am Schlitten gespannt werden, und sind z. B. riemenförmig oder vergleichbar zu breiten Gummibändern ausgestaltet. Diese Anordnung weist den zusätzlichen Vorteil auf, dass falls ein Verschleiß vorhanden ist, nur die Gleitpuffer abgezogen und durch neue ersetzt werden können, die auf den stegförmigen Führungsmittel aufgespannt werden. Somit kann einem möglichen mechanischen Verschleiß zuverlässig vorgebeugt werden. Die Gleitpuffer selbst können mit einer entsprechenden Beschichtung versehen sein, die die Haft- und Gleitreibung deutlich reduziert.

Um die Montage des Schlittens mit der eingebauten Kamera in die Kameravorrichtung zu verbessern, kann das Gehäuse zumindest zweiteilig ausgeführt sein. Hierbei ist es ferner denkbar, dass ein vorderes Gehäuseteil und ein hinteres Gehäuseteil das Gehäuse bilden. Ebenfalls ist es denkbar, dass noch weitere Gehäuseteile hinzukommen, wenn eben das Gehäuse nicht nur zweiteilig ausgebildet ist. Um jedoch möglichst die Anzahl der Gehäuseteile zu reduzieren, empfiehlt es sich, ein zweiteiliges Gehäuseteil einzusetzen. Das vordere Gehäuseteil nimmt dabei die Kameralinse sowie einen Großteil der Kamera mit dem entsprechenden Schlitten auf. Im hinteren Gehäuseteil ist hingegen der Rest vom Schlitten und der Kamera angeordnet. Insbesondere sind dort auch Getriebemittel vorhanden, um den Schlitten mit der Kamera hin und her bewegen zu können. So kann im hinteren Gehäuseteil ein Mitnehmer angeordnet sein, der um eine feste Drehachse durch den Antrieb gedreht wird. Durch diese Drehung kann der Mitnehmer den Schlitten hin- und herschieben. Dabei ist der Mitnehmer über ein Befestigungselement mit dem Schlitten befestigt.

Erfindungsgemäß ist es ferner denkbar, dass das bereits erwähnte Gehäuse eine Ausnehmung aufweist, durch die das Kamerakabel verläuft. Hierbei ist die Ausnehmung derart ausgebildet, dass eine Relativbewegung des Kamerakabels innerhalb der Ausnehmung ermöglicht ist. Zweckmäßigerweise ist die Ausnehmung als Langloch ausgestaltet und eine Verbindungslinie zwischen dem vorderen und dem hinteren Gehäuseteil läuft durch diese Ausnehmung, um die Montage des Schlittens mit der Kamera weiter zu vereinfachen. Zusätzlich kann in der Ausnehmung für das Kamerakabel eine Zusatztülle angeordnet sein, die die Ausnehmung vollständig oder teilweise verschließt. Das Kamerakabel selbst kann durch die Zusatztülle in das Gehäuse hinein geführt werden, so dass ein weiterer Schutz für das Kabel im Bereich der Ausnehmung des Gehäuses vorhanden ist. Die Zusatztülle ist quasi trichterförmig ausgebaut, wobei die Verengung des trichterförmigen Endes der Zusatztülle das Kamerakabel dicht umschließt. Das erweiterte und trichterförmige Ende der Zusatztülle liegt hingegen am Rand der langlochförmigen Ausnehmung des Gehäuses an und dient als Längsführung für das Kamerakabel. Die Zusatztülle kann in einer Nut im Rand der Ausnehmung im Gehäuse eingeklemmt sein, um ebenfalls eine abdichtende Wirkung zu erreichen.

Bei der vorliegenden Erfindung ist vorgesehen, dass der Schlitten in eine über die Ruheposition hinausgehende Zusatzposition überführbar ist. Somit weist der Schlitten insgesamt drei definierte Positionen auf, nämlich die Aufnahmeposition, die Ruheposition und die zuletzt erwähnte Zusatzposition. Da alle drei Positionen (ausschließlich) durch eine Linearbewegung des Schlittens erreichbar sind, kann die Zusatzposition durch einen manuellen Druck von einem Bediener auf den Schlitten von außen auf die Kamera oder den Schlitten selbst in Richtung Gehäuse erreicht werden. Somit kann die Zusatzposition antriebsfrei erreicht werden, wobei die Zusatzposition insbesondere ausschließlich antriebsfrei erreichbar ist. Mit anderen Worten: Die Zusatzposition kann üblicherweise nicht durch den Antrieb des Schlittens angefahren werden. Vielmehr ist ein manueller Druck von außen hierfür erforderlich.

Um die Kamera auch innerhalb der Kameravorrichtung besonders geschützt unterzubringen, kann es vorgesehen sein, dass im Gehäuse, insbesondere im vorderen Gehäuseteil eine Öffnung für die Kamera, insbesondere die Linse, insbesondere bei der Aufnahmeposition vorhanden ist. Durch diese Öffnung im vorderen Gehäuseteil findet die Bilderfassung von der Kamera statt. Zu diesem Zweck kann die Kamera auch teilweise aus der Öffnung selbst herausragen, wenn sie ihre Aufnahmeposition einnimmt. In der Ruheposition ist hingegen der Schlitten mit der Kamera in die Kameravorrichtung hinein gezogen, so dass die erwähnte Öffnung im vorderen Gehäuseteil durch einen bewegbaren Deckel verschließbar ist. Dieser Deckel schützt die Kameravorrichtung vor Umwelteinflüssen, die durch die Öffnung eindringen können. Somit verbleibt die Kamera und insbesondere ihre Linse in der Ruheposition geschützt vor äußeren Umwelteinflüssen in der Vorrichtung. Damit ist die Kamera mit ihrer Kameralinse nur in der Aufnahmeposition den Umwelteinflüssen ausgesetzt. Hierdurch reduzieren sich die Wartungsarbeiten an der Kamera, die bspw. durch eine verschmutzte Linse oder Mechanik erforderlich sind.

Ferner kann es im Rahmen der Erfindung vorgesehen sein, dass der Deckel ausschließlich an dem vorderen Gehäuseteil befestigt ist. Hierzu kann eine feste Drehachse als Verbindungelement zwischen Deckel und dem vorderen Gehäuseteil dienen, wobei zusätzlich eine Rückstellfeder für den Deckel vorhanden sein kann, um den Deckel selbstständig (gemeint ist antriebsfrei) von einer Offenstellung in einer Schließstellung zu überführen. Diese Rückstellfeder ist zu diesem Zweck ebenfalls zwischen dem vorderen Gehäuseteil und dem Deckel angeordnet. Der Deckel selbst kann um eine feste Drehachse schwenken, wobei ein Teil des Deckels in seiner Offenstellung in die Kameravorrichtung hineinragt und der andere Teil herausragt, um der Kamera den Bilderfassungsbereich freizugeben. In der Offenstellung befindet sich der Deckel fast in einer horizontalen Stellung. Um den Deckel von seiner Schließstellung in die Offenstellung zu bewegen, kann zumindest ein Druckelement an der Innenseite des Deckels vorgesehen sein, welches mit der Kamera oder dem Schlitten mechanisch zusammenwirkt, wodurch der Deckel quasi aufgestoßen wird und von seiner Schließstellung in die Offenstellung überführt wird, wenn der Schlitten mit der Kamera von der Ruheposition in die Aufnahmeposition überführt wird. Idealerweise ist zumindest ein weiteres Druckelement an der Innenseite des Deckels angeordnet, um eine gleichmäßige Kraftverteilung zwischen Schlitten bzw. Kamera und dem Deckel beim Aufstoßen zu erhalten. Da der Deckel mit der Rückstellfeder belastet ist, wird dieser automatisch geschlossen, sobald sich der Schlitten mit der Kamera zurück in seine Ruheposition bewegt. Für die erwähnten Druckelemente können an dem Schlitten oder der Kamera geometrisch korrespondierende Einkerbungen oder Ausbuchtungen vorgesehen sein, die insbesondere eine Schräge aufweisen, an der das entsprechende Druckelement entlang gleiten kann.

Des Weiteren ist es erfindungsgemäß möglich, dass zwischen dem vorderen Gehäuseteil und dem Deckel ein Dichtungselement, insbesondere mit einer Ausbuchtung, einer Einkerbung und/oder Hohlkammer vorhanden ist, um eine einfache Stauchung des Dichtungselements an dieser Stelle durch einen Druck auf den anliegenden Deckel zu ermöglichen. Dieses Dichtungselement dichtet das vordere Gehäuseteil im Bereich der Öffnung mit dem Deckel ab. Durch dieses Dichtungselement soll verhindert werden, dass gerade bei großen Druckschwankungen, die bspw. durch den Fahrtwind des Fahrzeugs bei hohen Geschwindigkeit sowie die Anwendung von Hochdruckreinigern und dergleichen vorhanden sind, eine Verschmutzung der Kamera im Inneren der Kameravorrichtung stattfindet. Die erwähnte Stauchung des Dichtungselements ist erforderlich, um einen Druck auf den anliegenden Deckel in eine geringe Schwenkbewegung des Deckels (gemeint ist eine Drehung um wenige Grad) zu überführen, wobei der Deckel hierdurch auf den Schlitten mit der Kamera drückt und diesen folglich aus der Ruheposition in die darüber hinausgehende Zusatzposition überführt. Somit muss das Dichtungselement in der Schließstellung des Deckels einerseits dicht sein und trotzdem nachgiebig ausgestaltet sein, um einen manuellen Druck, z. B. von einem Bediener eines Fahrzeugs auf den Deckel, in eine geringe Drehbewegung zu überführen, wodurch schließlich der Schlitten linear auf die Zusatzposition verschoben wird. Idealerweise ist der abdichtende Rand des Dichtungselements geometrisch komplementär zu einem Dichtungsrand des Dichtungselements ausgestaltet, die auf diese Art auch in der Schließstellung zusätzlich eine Labyrinthdichtung bilden können.

Ferner ist es im Rahmen der Erfindung denkbar, dass über eine Bewegung der Kamera aus der Ruheposition in Richtung Zusatzposition durch das Schaltelement ein Signal auslösbar ist. Dieses Signal vom Schaltelement kann insbesondere eine fahrzeugspezifische Funktion auslösen, wie z. B. ein Öffnungssignal für eine Heckklappe, Tür oder dergleichen am Fahrzeug oder ein Wecksignal für das Fahrzeug. Wie bereits erwähnt, kann die Bewegung des Schlittens mit der Kamera durch einen manuellen Druck auf den Deckel erfolgen, um somit den Schlitten aus der Ruheposition in die Zusatzposition zu bewegen. Gerade in dieser Zusatzposition wird das Schaltelement betätigt, wodurch das Signal ausgelöst wird.

Um eine Fehlfunktion des Schaltelements zu vermeiden, können auch mehrere Schaltelemente angeordnet sein, die durch den Schlitten mit der Kamera in der Zusatzposition betätigt werden. Eine Steuereinheit kann dann die gelieferten Signale der Schaltelemente auf ordnungsgemäße Funktion überprüfen. Idealerweise ist das Schaltelement in einem hinteren Bereich der Kameravorrichtung angeordnet, um dieses möglichst vor Verunreinigung, die bspw. vom vorderen Bereich mit der Gehäuseöffnung für die Kameralinse stammen, zu schützen.

Des Weiteren ist es erfindungsgemäß vorgesehen, dass zumindest ein Schaltelement am Gehäuse angeordnet ist, welches zumindest teilweise in den Verfahrweg des Schlittens hineinragt, wobei der Schlitten wenigstens ein Auslöseelement, wie z. B. eine Schlitten- und/oder Kameragehäusekante aufweist, dass bei der Bewegung des Schlittens mit der Kamera in Richtung Zusatzposition das Schaltelement auslöst. Somit wirkt das Auslöseelement vom Schlitten bzw. der Kamera direkt auf das Schaltelement in der Zusatzposition. Somit kann bei der vorliegenden Erfindung auf ein zusätzliches Bedienelement verzichtet werden, da der Deckel der Kameravorrichtung gleichzeitig diese Funktion übernimmt und hierdurch das Schaltelement indirekt über das Auslöseelement am Schlitten mit der Kamera betätigt wird. Außerdem weist diese Anordnung den Vorteil auf, dass auf ein weiteres Bedienelement neben der Kamera verzichtet werden kann, wodurch sich der benötigte Bauraum weiter verringern lässt. Auch die Anzahl der beweglichen Teile kann somit reduziert werden, so dass insgesamt eine besonders kompakte Kameravorrichtung erreicht werden kann.

Auch kann es erfindungsgemäß vorgesehen sein, dass am Schlitten ein Federelement wirkt, dessen Federkraft entgegengesetzt zur Bewegungsrichtung des Schlittens zur Zusatzposition orientiert ist. Dieses Federelement kann dafür sorgen, dass der Schlitten aus der Zusatzposition zurück in die Ruheposition überführt wird, sobald der manuelle Druck auf den Schlitten bzw. die Kamera nachlässt, der vom Deckel von außen übertragen wird. Somit kann auf den zusätzlichen Einsatz des Antriebs verzichtet werden, wodurch auch die bauliche Komplexität der Kameravorrichtung vereinfacht werden kann.

Auch ist es erfindungsgemäß möglich, dass das zuvor erwähnte Federelement innerhalb einer Kammer von dem Gehäuse der Kameravorrichtung angeordnet ist. In dieser Kammer kann das Federelement leicht vorgespannt angeordnet sein, wodurch sich das Federelement in der Kammer auch fixieren lässt. Ferner ist es denkbar, dass der Schlitten einen Vorsprung aufweist, der das Federelement kontaktiert, wodurch der Schlitten aus seiner Zusatzposition in die Ruheposition gedrückt wird.

Optional ist es denkbar, dass die Kammer für das Federelement einen Durchbruch aufweist, durch den sich der Vorsprung des Schlittens bei der Bewegung in Richtung der Zusatzposition erstreckt. Hierdurch kann die Kamera quasi das Federelement in beiden Enden einspannen und wird nur vom Schlitten bzw. der Kamera durch den Vorsprung kontaktiert, der durch den Durchbruch in der Kamera ragen kann. Damit ist insgesamt eine zuverlässige Rückführung des Schlittens mit der Kamera aus der Zusatzposition auf die Ruheposition möglich. Hierbei wirkt die Federkraft des Federelements so lange auf den Schlitten mit der Kamera, bis dieser die Ruheposition erreicht hat. In der Ruheposition wirkt die Federkraft vom Federelement minimal bis überhaupt nicht.

Auch ist es erfindungsgemäß möglich, dass der Deckel ausschließlich von der Kamera und/oder dem Schlitten bei einem Wechsel von der Ruheposition in die Aufnahmeposition betätigbar ist. Somit ist der Deckel selbst antriebslos ausgestaltet und wird nur indirekt über die Kamera mit dem Schlitten betätigt. Die Rückstellung erfolgt über die entsprechende Rückstellfeder, sobald der Schlitten mit der Kamera in die Ruheposition überführt wird. Damit ist eine besonders einfache Konstruktion für die Kameravorrichtung möglich, die auch eine geringe Störanfälligkeit aufweist.

Ebenfalls ist es erfindungsgemäß denkbar, dass der Antrieb und/oder zumindest ein Getriebemittel seitlich neben dem Gehäuse für den Schlitten angeordnet ist. Durch die seitliche Anordnung des Antriebs- und/oder zumindest eines Getriebemittels kann erreicht werden, dass die Bauraumtiefe gering gehalten wird. Hierbei ist es auch möglich, dass das Getriebemittel zwischen Antrieb und dem Schlitten vorgesehen ist, um eine besonders kompakte Ausgestaltung der Kameravorrichtung zu erzielen. Dabei kann das Getriebemittel auch teilweise in dem Gehäuse angeordnet sein.

Auch ist es im Rahmen der Erfindung denkbar, dass durch einen Druck auf den geschlossenen Deckel für die Kamera ein weiteres oder optionales Schaltelement betätigbar ist, um zumindest ein Signal zu erzeugen, wobei die Kamera selbst in ihrer Ruheposition verweilt und nicht in eine Zusatzposition verfahren wird. Hierzu kann das entsprechende Schaltelement unterhalb der Kamera, insbesondere dem Kameraschlitten am Gehäuse, insbesondere einem vorderen Gehäuseteil, fest angeordnet sein und insbesondere direkt oder indirekt über ein Betätigungsmittel betätigt werden. Sofern eine indirekte Betätigung des Schaltelements über ein Betätigungsmittel erfolgt, kann eine einfache und optimale Abdichtung des Schaltelements erfolgen. Hierzu wirkt das Betätigungsmittel mit einer Dichtung zusammen, so dass keine Feuchtigkeit durch eine Führung des Betätigungsmittels zum Schaltelement oder zum Inneren des Gehäuses dringen kann. Das Schaltelement kann an einer Aufnahme im oder am Gehäuse befestigt werden. Idealerweise ist das Gehäuse, insbesondere der vordere Gehäuseteil, als Kunststoff-Spritzgussteil ausgestaltet, so dass auch die Aufnahme für das Schaltelement einem Fertigungsschritt bzw. Spritzgussschritt mit dem Gehäuse herstellbar ist. Zweckmäßigerweise ist das Betätigungsmittel als längsverschieblicher Stößel ausgestaltet und im oder am Gehäuse angeordnet. Um die Druckkraft vom Deckel auf das Betätigungsmittel zu erhöhen, ist das Schaltelement mit dem Betätigungsmittel mittig unterhalb der Kamera am bzw. im Gehäuse angeordnet. Da der Drehpunkt bzw. die Drehachse des Deckels im oberen Drittel angeordnet sein kann, entsteht ein Hebelsystem, wodurch die Druckkraft auf das Schaltelement verstärkt werden kann. Durch das Schaltelement kann ein Signal ausgelöst werden, wodurch z. B. eine fahrzeugspezifische Funktion auslösbar ist (s. nachfolgende Beschreibung).

Ferner ist es im Rahmen der Erfindung denkbar, dass der Zierring für die Kameravorrichtung außenseitig am Fahrzeug über eine Rast- oder Clipsverbindung mit der Kameravorrichtung oder der Karosserie vom Fahrzeug formschlüssig verbindbar ist. Dieser Zierring kann als wesentlicher Bestandteil ABS-Kunststoff (ABS steht für Acrylnitril-Butadien-Styrol) aufweisen und außenseitig mit einer Chromschicht versehen sein, um einen wohlgefälligen Eindruck zu vermitteln. Idealerweise wird der Zierring nicht direkt mit der Karosserie oder der Kameravorrichtung verbunden, da eine Rastverbindung aus ABS-Kunststoffmaterial technische Probleme mit sich bringt, da nämlich die federnden Rastnasen leicht abbrechen. Somit ist es von Vorteil, wenn ein entsprechender Zierring indirekt über zwei ringförmige Halbschalen mit der Fahrzeugkarosserie oder der Kameravorrichtung, insbesondere dem Gehäuse, formschlüssig verbunden wird. Dabei können diese beiden ringförmigen Halbschalen zumindest einen Teil der Rastverbindung, insbesondere in Form von Rastmitteln, bilden und über Vorsprünge rückseitig in den Zierring formschlüssig eingreifen, um diesen sicher am Fahrzeug, insbesondere der Kameravorrichtung, zu befestigen. Um den Zierring nicht zu verformen oder sogar zu zerstören, sind die beiden ringförmigen Halbschalen baulich voneinander getrennt aufgebaut und greifen diametral bzw. links- und rechtsseitig oder ober- und unterseitig in den Innenrand des Zierrings ein, um den Zierring am Fahrzeug indirekt über die Rastverbindung an den ringförmigen Halbschalen formschlüssig am Fahrzeug zu befestigen. Idealerweise ist zwischen dem Zierring und dem Karosserieblech eine zusätzliche Dichtung vorgesehen, damit der Lack der Karosserie geschützt wird und Feuchtigkeit durch die Öffnung in der Karosserie nicht ins Innere des Fahrzeugs gelangen kann.

Im Rahmen der Erfindung ist es ferner denkbar, dass wesentliche Bauteile oder Baugruppen der erfindungsgemäßen Kameravorrichtung als Kunststoff-Spritzgussteile hergestellt sind. So kann z. B. der gesamte Schlitten, die Getriebemittel, das Gehäuse sowie große Teile des Antriebs aus Kunststoff-Spritzgussteilen bestehen.

Erfindungsgemäß können die Merkmale der Beschreibung und der Ansprüche und der erfindungsgemäßen Vorrichtung sowohl einzeln für sich als auch in den verschiedensten Kombinationen erfindungswesentlich sein. Weitere, die Erfindung verbessernde Maßnahmen werden nachstehend gemeinsam mit der Beschreibung eines bevorzugten Ausführungsbeispieles der Erfindung anhand der Figuren näher dargestellt. Es zeigen:
- Figur 1: eine dreidimensionale Ansicht der erfindungsgemäßen Kameravorrichtung, wobei das Gehäuse für den Schlitten zweiteilig ausgestaltet ist und die hintere Gehäusehälfte ausgeblendet ist, um ins Innere blicken zu können,
- Figur 2: eine rechte Seitenansicht auf die Kameravorrichtung aus Figur 1 jedoch mit geschlossenen Gehäuse, d. h. mit zusammengesetzten vorderem und hinterem Gehäuseteil,
- Figur 3: ein Schnitt A-A durch die Kameravorrichtung aus Figur 2, wobei sich die Kamera in einer Ruheposition und ein Deckel vor der Gehäuseöffnung für die Kamera in einer Schließstellung befindet,
- Figur 4: eine Ausschnittvergrößerung aus Bereich B der Kameravorrichtung aus Figur 3,
- Figur 5: eine teilweise Explosionsansicht auf die erfindungsgemäße Kameravorrichtung von rechts vorne, wobei ein Zierring und ein Deckel mit einer Abdeckung separat dargestellt sind,
- Figur 6: eine Explosionsansicht von einem Antrieb, der über Getriebemittel einen Schlitten der erfindungsgemäßen Kameravorrichtung antreibt,
- Figur 7: eine dreidimensionale Ansicht einer Baugruppe der Kameravorrichtung von links vorne mit einem Mitnehmer, der befestigt an dem Schlitten für die Kamera ist,
- Figur 8: eine schematische Ansicht der Kameravorrichtung in einer Ruheposition,
- Figur 9: eine schematische Ansicht der Kameravorrichtung in einer Aufnahmeposition,
- Figur 10: eine schematische Ansicht der Kameravorrichtung in einer Zusatzposition,
- Figur 11: eine dreidimensionale Seitenansicht von rechts hinten auf eine Baugruppe der Kameravorrichtung mit montiertem Schlitten, in der die Kamera angeordnet ist und das seitliche Kamerakabel herausragt, montiert in dem hinteren Gehäuseteil,
- Figur 12: eine Innenansicht auf ein erstes Schlittenteil mit montierter Kamera und seitlich angeschlossenem Kamerakabel,
- Figur 13: eine Innenansicht auf ein erstes Schlittenteil ohne montierte Kamera,
- Figur 14: eine dreidimensionale Ansicht von vorne auf das Gehäuse der erfindungsgemäßen Kameravorrichtung ohne Kamera, jedoch mit Betätigungsmittel für ein Schaltelement,
- Figur 15: eine dreidimensionale Ansicht auf den Gehäuseteil der Kameravorrichtung aus Figur 14, wobei das Schaltelement sichtbar ist,
- Figur 16: zwei ringförmige Halbschalen zur Befestigung eines Zierrings der Kameravorrichtung am Fahrzeug und
- Figur 17: eine schematische Darstellung der Befestigung des Zierrings im Schnitt aus Figur 16.

In den nachfolgenden Figuren werden für die gleichen technischen Merkmale auch von unterschiedlichen Ausführungsbeispielen oder Varianten die identischen Bezugszeichen verwendet.

In den dargestellten Figuren ist eine mögliche Ausführungsform einer erfindungsgemäßen Kameravorrichtung 10 gezeigt, die als Einparkhilfe für ein Kraftfahrzeug dient. Die Kameravorrichtung 10 verfügt über einen Antrieb 50, der über Getriebemittel mit einer Kamera 4 verbunden ist. Die Kamera 4 lässt sich zwischen einer eingefahrenen Position 1, einer ausgefahrenen Position 2 sowie einer Zusatzposition 3 bewegen. In der eingefahrenen Position 1 befindet sich die Kamera 4 in der Ruhestellung 1, ohne das eine Aufnahme des Außenbereiches 5 stattfindet. Während des Einparkvorgangs wird die Kamera 4 in ihre ausgefahrene Position 2 (Aufnahmeposition 2) bewegt, um Bildinformationen, die sich auf den Außenbereich 5 des Kraftfahrzeuges beziehen, für den Benutzer zur Verfügung zu stellen.

Die Kamera 4 befindet sich innerhalb eines Schlittens 11, der als ein inneres Kameragehäuse bzw. Umhüllung wirkt. Während sich die Kamera 4 in die jeweilige Position 1, 2, 3 bewegt, erfolgt gleichzeitig eine Bewegung des Schlittens 11 in einer Bewegungsrichtung 7, die linear ausgestaltet ist, wobei gemäß des Ausführungsbeispiels der Schlitten 11 fest mit der Kamera 4 verbunden ist.

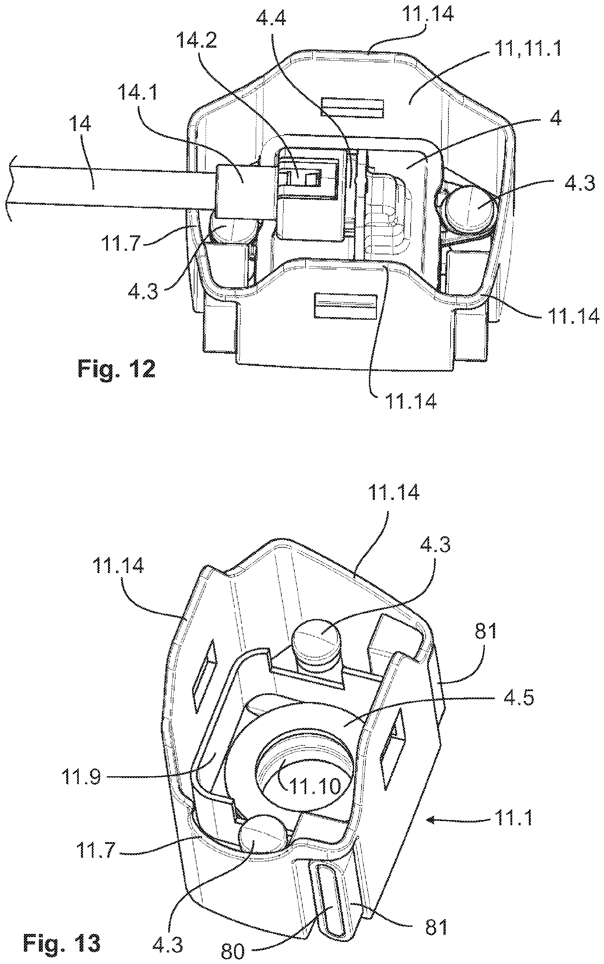

Im vorliegenden Ausführungsbeispiel ist der Schlitten 11 zweiteilig ausgebildet, wobei ein erstes Teil 11.1 und ein zweites Teil 11.2 den Kameraschlitten 11 bilden. Seitlich ist eine Öffnung 11.7 im Schlitten 11 angeordnet, durch die eine elektrische Leitung bzw. Kamerakabel 14 verläuft, die im inneren des Kameraschlittens 11 mit der Kamera 4 elektronisch durch einen Stecker 14.1 mit einer Rastverbindung 14.2 (s. im Detail Fig. 12) verbunden ist. Ein Vorteil des zweiteiligen Kameraschlittens 11 ist, dass die Kamera 4 montagefreundlicher im Kameraschlitten 11 montiert werden kann.

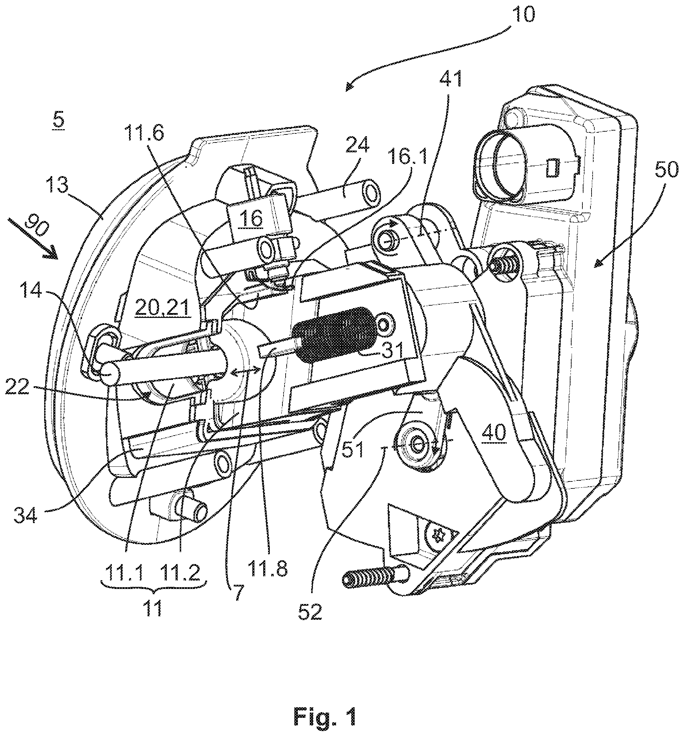

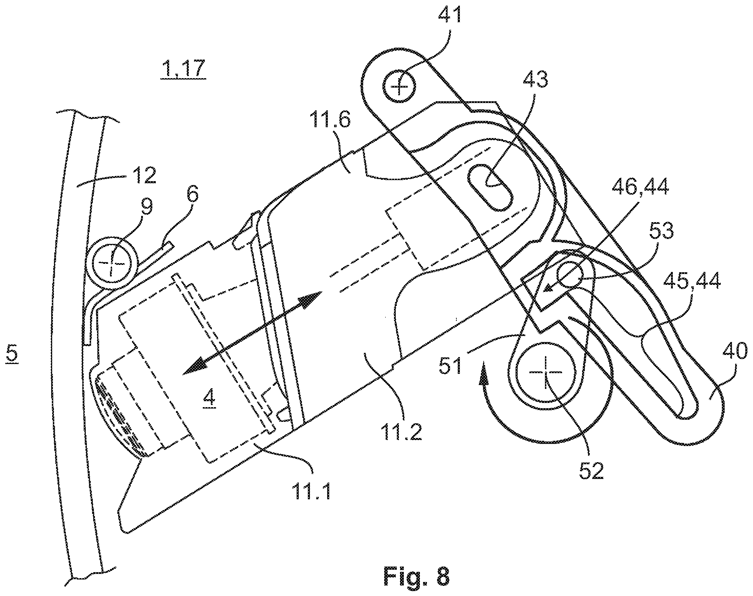

Wie in den Figuren gezeigt ist, sind die Getriebemittel derart ausgebildet, dass über eine manuelle Betätigung von außen 5 (in Richtung des Pfeils 90) die Kamera 4 in eine weitere, über die eingefahrene Position 1 hinausgehende Zusatzposition 3 bewegbar ist, welches in den Figur 8 bis 10 gezeigt ist. Über die Bewegung der Kamera 4 aus der eingefahrenen Position 1 in Richtung Zusatzposition 3 lässt sich ein Signal durch ein Schaltelement 16 auslösen, welches eine fahrzeugspezifische Funktion auslösen kann. Im vorliegenden Ausführungsbeispiel dient das Signal bspw. dazu, dass die Heckklappe geöffnet werden kann. Gemäß Figur 1 bis 4 sowie Figur 10 drückt der Benutzer in Richtung des Pfeils 90 auf die Kameravorrichtung 10, insbesondere auf einen Deckel 12 der Kameravorrichtung 10, der gemäß den Figuren 1 bis 4 sich in der Schließstellung 17 befindet. In der ausgefahrenen Position 2 der Kamera 4 befindet sich der Deckel 12 in der Offenstellung 18. Auf den Deckel 12, der über eine Drehachse 9 mit der Kameravorrichtung 10 drehbar verbunden ist, wirkt zumindest eine (Rückstell-)Feder 6, so dass zuverlässig der Deckel 12 aus der Offenstellung 18 selbständig in die Schließstellung 17 verfahren kann, wenn die Kamera 4 in Richtung der eingefahrenen Position 1 bewegt wird.

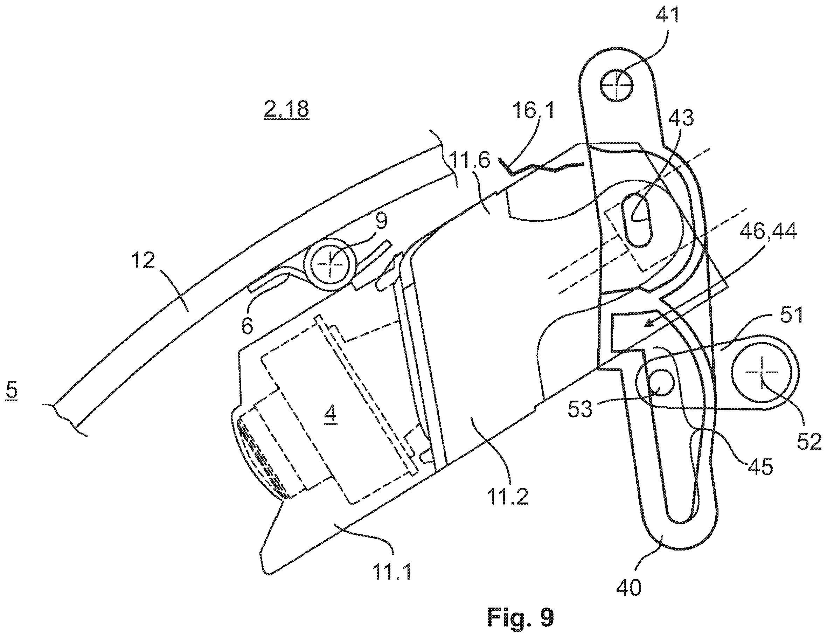

Wie anhand der Figuren 8 und 9 zu erkennen ist, schwenkt dabei der Deckel 12 mit dem oberen Bereich in die Kameravorrichtung 10 hinein und mit dem unteren Bereich des Deckels aus der Kameravorrichtung 10 hinaus. Folglich ist ein entsprechender Freiraum oberhalb der Kamera 4 bei der erfindungsgemäßen Kameravorrichtung 10 vorgesehen, in den der obere Bereich des Deckels 12 hineinschwenken kann, um seine Offenstellung 18 einnehmen zu können.

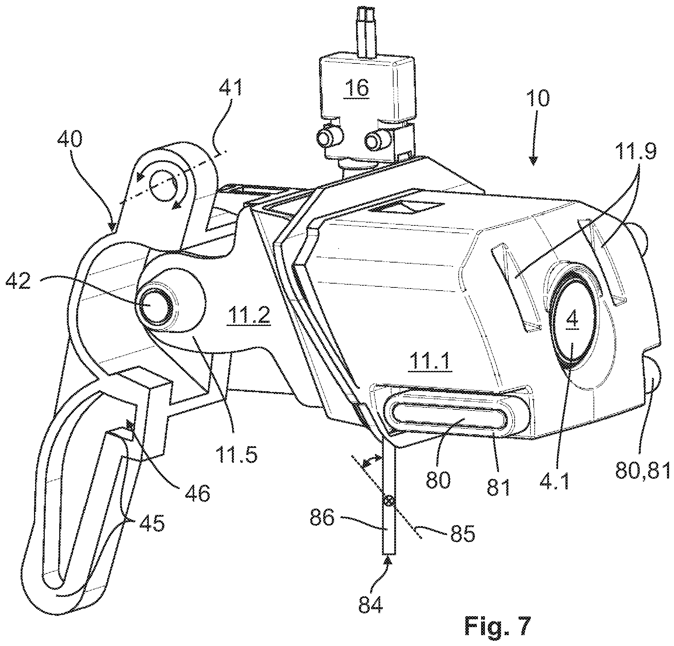

Der Schlitten 11 weist seitlich eine Öffnung 11.7 auf, durch die das Kamerakabel 14 bis zur Kamera 4 verläuft. Der Kameraschlitten 11 ist zudem erfindungsgemäß durch ein Gehäuse 20 umfasst, welches im vorliegenden Ausführungsbeispiel zweiteilig ausgeführt ist. Hierbei weist das Gehäuse 20 ein vorderes Gehäuseteil 21 und ein hinteres Gehäuseteil 30 auf, welches über zumindest ein Verbindungselement 24 vorzugsweise 4 Verbindungselement 24 sicher zusammenfügbar ist. Das vordere Gehäuseteil 21 ist zum Deckel 12 ausgerichtet, wobei das hintere Gehäuseteil 30 zum Antrieb 50 zugewandt ist. Das vordere Gehäuseteil 21 umfasst eine Öffnung 23, die zum Deckel 12 ausgerichtet ist. In der eingefahrenen Position 1 bzw. in der Zusatzposition 3 verdeckt der Deckel 12 die Öffnung 23. In der ausgefahrenen Position 2 der Kamera 4 hingegen befindet sich der Deckel 12 in der Offenstellung 18, wobei die Öffnung 23 von außen 5 sichtbar ist und die Kamera 4 zumindest teilweise durch die Öffnung 23 sich erstreckt. Das Gehäuse 20 weist zudem eine seitliche Ausnehmung 22 auf, durch die die Leitung 14 verläuft. Die Ausnehmung 22 wird durch eine Abdeckung 26 verdeckt, die auch eine abdichtende Funktion aufweist. Die Ausnehmung 22 ist vergrößert ausgebildet, so dass bei einer Bewegung des Schlittens 11 die Leitung 14 zuverlässig sich in der Ausnehmung 22 bewegen kann. Die Ausnehmung 22 bietet somit einen genügend großen Bewegungsspielraum für die Leitung 14. Gemäß Figur 1 und Figur 7 ist der Schlitten 11 innerhalb des Gehäuses 20 beweglich gelagert, wobei das Gehäuse 20 ein Führungselement 34 aufweist, in dem der Schlitten 11 während der Bewegung zwischen den Positionen 1, 2, 3 geführt ist. Der Schlitten 11, insbesondere das erste Teil 11.1 des Schlittens 11 weist eine Aufnahme 80 auf, die innerhalb des Führungselementes 34 des Gehäuses 20 beweglich gelagert ist. Gemäß des dargestellten Ausführungsbeispiels umfasst ein Band 81 (oder Gleitpuffer 81) die Aufnahme 80, wobei das Band 81 vorteilhafterweise aus POM-Material (wie bereits beschrieben) ist. Wenn die Kamera 4 in die jeweilige Position 1, 2, 3 bewegt wird, verfährt das Band 80 innerhalb des Führungselementes 34 des Gehäuses 20. Wie in Figur 7 gezeigt ist, weist das erste Teil 11.1 des Schlittens 11 zu beiden Seiten hin die oben beschriebene Aufnahme 80 auf, die durch jeweils ein Band 81 umfasst ist. Es hat sich gezeigt, dass während der Bewegung des Schlittens 11 keine Geräuschentwicklung innerhalb des Führungselementes 34 des Gehäuses 20 entsteht. Zudem ist eine derartige Lagerung des Schlittens 11 am Gehäuse 20 sehr verschleißarm.

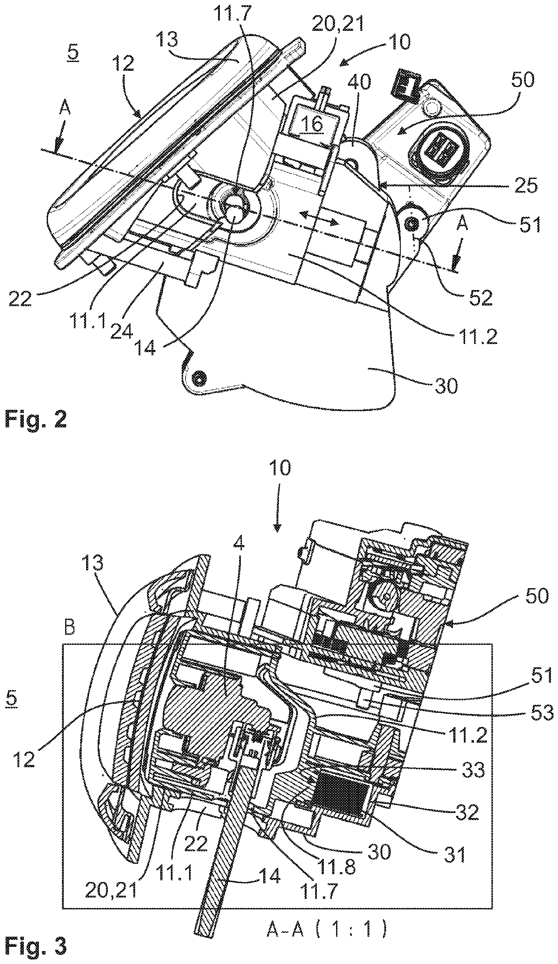

In Figur 2 ist zu erkennen, dass das Gehäuse 20 eine Aufnahme 25 aufweist, in der zumindest ein Getriebemittel zur Bewegung des Schlittens 11 in seine jeweilige Position 1, 2, 3 bewegbar aufgenommen ist. Das Getriebemittel steht mit dem Antrieb 50 in Wirkverbindung, wobei der Antrieb 50 beispielsweise ein Elektromotor sein kann. Das Getriebemittel kann einen gemäß Figur 2 vorgesehenen Mitnehmer 40 aufweisen, der in der Aufnahme 25 des hinteren Gehäuseteils 30 sich befindet.

Gemäß des Ausführungsbeispiels weist der Antrieb 50 ein Antriebselement 51 auf, das um eine Achse 52 bewegbar ist. Zudem ist das Antriebselement 51 mit einem Nocken 53 ausgebildet, der an dem Mitnehmer 40 angreift. Der Mitnehmer 40 weist eine Kulissenführung 44 auf und ist drehbar um die Achse 41 gelagert. Der Nocken 53 verfährt innerhalb der Kulissenführung 44, wenn die Kamera 4 sich in ihre jeweilige Position 1, 2, 3 bewegt.

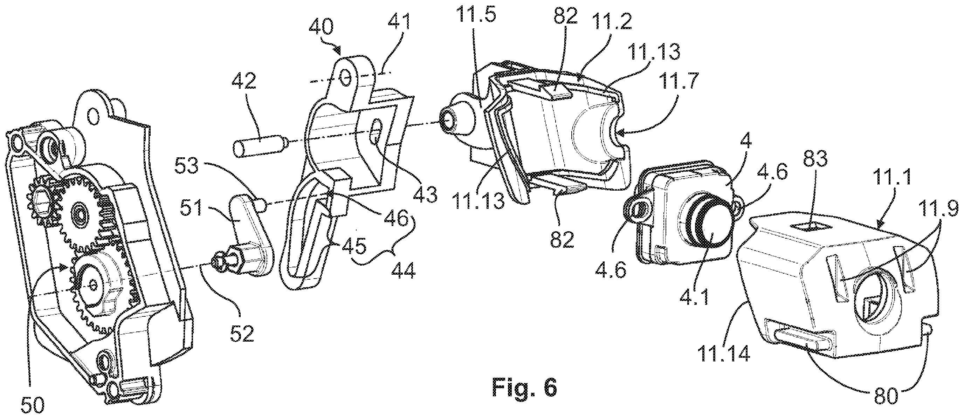

In Figur 8 ist die eingefahrene Position 1 der Kamera 4 gezeigt. Der Nocken 53 befindet sich in einem ersten Bereich 45 der Führung 44. Erfolgt nun über den Antrieb 50 eine Bewegung des Antriebselementes 51 im Uhrzeigersinn, verfährt der Nocken 53 innerhalb der Kulissenführung 44, insbesondere innerhalb des ersten Bereiches 45 bis zu der Stellung gemäß Figur 9. Während das Antriebselement 51 sich im Uhrzeigersinn um die Achse 52 verschwenkt hat, erfolgt eine Verschwenkung des Mitnehmers 40 im Uhrzeigersinn um die Achse 41. Beabstandet zur Achse 41 ist der Mitnehmer 40 mit dem Schlitten 11 mittels eines Befestigungselementes 42 verbunden. Dieses ist insbesondere in Figur 6 und 7 dargestellt. Hier ist gezeigt, dass das Befestigungselement 42 innerhalb einer Ausgleichskontur 43 des Mitnehmers 40 beweglich ist. Die Ausgleichskontur 43 ist im vorliegenden Ausführungsbeispiel ein Langloch. Bei dem Befestigungselement 42 kann es sich bspw. um eine Nietverbindung handeln.

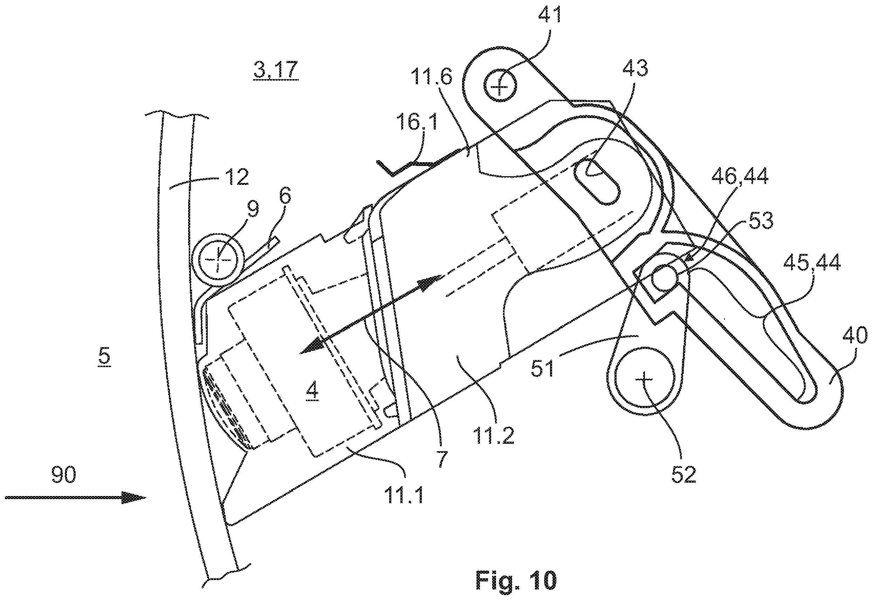

Eine Zurückbewegung der Kamera 4 aus der ausgefahrenen Position 2 in die eingefahrene Position 1 kann dadurch erfolgen, dass über den Antrieb 50 das Antriebselement 51 gegen den Uhrzeigersinn aus Figur 9 gedreht wird, bis die Position des Antriebselementes 51 erreicht ist, die es in Figur 8 einnimmt. Erfolgt nun von außen eine manuelle Betätigung durch den Benutzer auf den Schlitten 11, wird der Schlitten 11 von der eingefahrenen Position 1 in die Zusatzposition 3 bewegt, welches in Figur 10 gezeigt ist. Hierbei ist die Kulissenführung 44 derart ausgebildet, dass zuverlässig der Schlitten 11 mit dem daran angeordneten Mitnehmer 40 in das Kraftfahrzeuginnere bewegt werden kann, ohne dass es zu einer ungewollten Kollision mit feststehenden Getriebemitteln, wie z. B. dem Antriebselement 51 kommt. Aus diesem Grund weist die Kulissenführung 44 einen zweiten Bereich 46 auf, der eine weitere Ausnehmung innerhalb des Mitnehmers 40 ist, wobei die Ausnehmung in Richtung Deckel 12 sich erstreckt. Im Gegensatz zum zweiten Bereich 46 ist der erste Bereich 45 der Kulissenführung 44 länglich erstreckt, und zwar in entgegengesetzter Richtung zur Achse 41 des Mitnehmers 40. Eine Seite des ersten Bereiches 45 ist zudem teilweise kreissegmentartig ausgeführt, so dass bei einer Drehung des Antriebselementes 51 ausgehend von Figur 8 im Uhrzeigersinn zunächst der Mitnehmer 40 in seiner Position verbleibt. Hierdurch wird ein Freilauf erzeugt, der vorteilhaft sein kann, insbesondere bei der Auswahl von einfachen, kostengünstigen Elektromotoren. Erst ab einer gewissen Drehstellung des Antriebs 50 bzw. des Antriebselements 51 nimmt der Nocken 53 den Mitnehmer 40 im Uhrzeigersinn mit, wodurch eine Bewegung des Schlittens 11 erzielt wird. Vorteilhafterweise handelt es sich bei der im Ausführungsbeispiel gezeigten Bewegung des Schlittens 11 um eine Linearbewegung zwischen den jeweiligen Positionen 1, 2, 3.

Wie aus den Figuren 9 und 10 des vorliegenden Ausführungsbeispiels weiter zu erkennen ist, wird bei einer Bewegung des Schlittens 11 von der Aufnahmeposition 2 über die Ruheposition 1 in die Zusatzposition 3 das Schaltelement 16 betätigt. In den Figuren 9 und 10 ist von dem Schaltelement 16 nur das Betätigungsmittel 16.1 dargestellt, welches als Schaltfahne ausgebildet ist. In der Figur 9 ist das Betätigungselement 16.1 vom Schaltelement 16 unberührt, d. h. es hat keinen Kontakt zu der Kamera 4 oder dem Schlitten 11. Wird nun der Schlitten 11 mit der Kamera 4 von der Aufnahmeposition 2 oder der Ruheposition 1 in die Zusatzposition 3, die in Figur 10 dargestellt ist, überführt, so berührt der Schlitten 11 mit seinem Auslöseelement 11.6 das Betätigungsmittel 16.1, wodurch dieses nach oben gedrückt wird. Hierdurch findet eine Betätigung des Schaltelements 16 statt, wodurch das gewünschte Schaltsignal erzeugt wird. Zu diesem Zweck ist am Schlittengehäuse 11 ein Absatz angeordnet, der als Auslöseelement 11.6 für das entsprechende Betätigungsmittel 16.1 vom Schaltelement 16 dient. Sobald der Schlitten 11 durch das Federelement 31 aus der Zusatzposition 3 in zumindest die Ruheposition 1 überführt wird, gibt das Auslöseelement 11.6 das Betätigungsmittel 16.1 vom Schaltelement 16 wieder frei, wodurch das entsprechende Schaltsignal unterbrochen wird. Die Verschiebung des Schlittens 11 mit der Kamera 4 von der Ruheposition 1 in die Zusatzposition 3 erfolgt durch einen manuellen Druck in Richtung des Pfeils 90 auf das Deckelelement 12, wie bereits beschrieben.

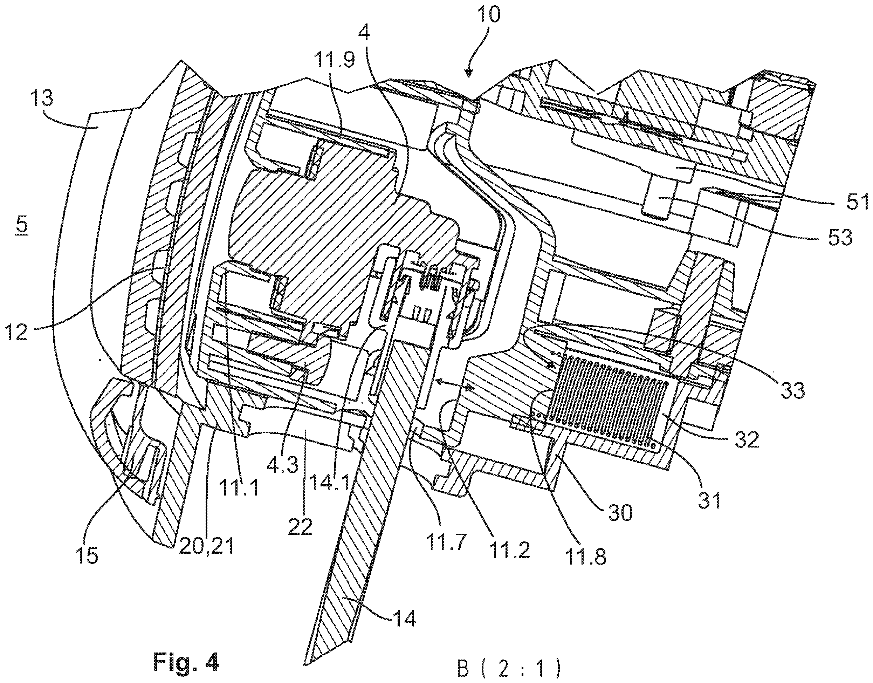

Gemäß Figur 3 und 4 ist gezeigt, dass auf den Schlitten 11 eine Feder 31 wirkt, um den Schlitten 11 von der Zusatzposition 3 wieder zurück in die eingefahrene Position 1 zu bewegen. Die Feder 31 befindet sich in einer Kammer 32 des Gehäuses 20, insbesondere des hinteren Gehäuseteils 30, wobei die Kammer 32 mit einer Öffnung 33 versehen ist, in die ein Vorsprung 11.8 einfahren kann. In der eingefahrenen Position 1 der Kamera 4 übt vorzugsweise das Federelement 31 keine Kraft auf den Vorsprung 11.8 aus. Erst bei der Bewegung in Richtung Zusatzposition 3 erfolgt eine Annäherung des Vorsprungs 11.8 an das Federelement 31. Übt der Benutzer keine Kraft mehr auf den Schlitten 11, insbesondere auf den Deckel 12 aus, bewirkt die Federkraft der Feder 31, die auf den Vorsprung 11.8 wirkt, dass der Schlitten 11 mit der Kamera 4 zurück in die eingefahrene Position 1 verfährt.

Ebenfalls ist es denkbar, dass die Zusatzposition 3 über Rastmittel gehalten werden kann, was explizit nicht gezeigt ist. Wie in Figur 1 und 2 dargestellt ist, ist die Kameravorrichtung 10 mit einem Schaltelement 16 vorgesehen, dass oberhalb des Schlittens 11 angeordnet ist. Der Schalter 16 ragt zumindest teilweise in den Verfahrweg des Schlittens 11 hinein. Zudem weist der Schlitten 11 ein Auslöseelement 11.6 auf, das bei der Bewegung der Kamera 4 in Richtung Zusatzposition 3 das Schaltelement 16 auslöst. Das Schaltelement 16 ist fest am Gehäuse 20 befestigt. Wird das Schaltelement 16 aktiviert, folgt eine Auslösung eines Signals, wodurch eine fahrzeugspezifische Funktion auslösbar ist.

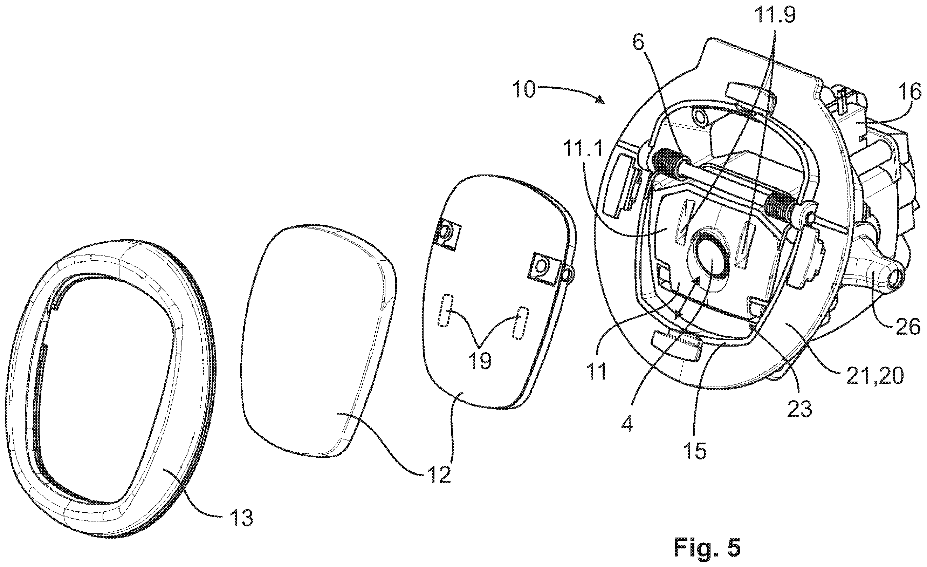

Wie in Figur 5 gezeigt ist, weist der bewegbare Deckel 12 innenseitig Druckelemente 19 auf, die bei einer manuellen Betätigung von außen 5 auf die Kamera 4 wirken. Die Druckelemente 19 greifen in Aufnahmen 11.9 ein, wobei bei einem Herausbewegen der Kamera 4 in die ausgefahrene Position 2 die Druckelemente 19 in den Aufnahmen 11.9 entlang gleiten und eine entsprechende Führung bei der Bewegung des Deckels 12 haben. Die Druckelemente 19 befinden sich innenseitig am Deckel 12 und erstrecken sich vorsprungartig in Richtung Schlitten 11.

Gemäß Figur 7 ist der Schlitten 11, insbesondere der zweite Teil 11.2 mit einem Halteelement 11.5 ausgeführt, durch den das Befestigungselement 42 sich erstreckt. Im Bereich der Öffnung 23 befindet sich eine Dichtung 15, auf der der Deckel 12 in der Schließstellung 17 anliegt, siehe Figur 5. Bei der Dichtung 15 handelt es sich im vorliegenden Ausführungsbeispiel um eine Labyrinthdichtung, die eine wirksame Abdichtung bewirkt. Ein Zierring 13 ist umfangseitig zum Deckel 12 angeordnet, wobei der Zierring 13 vorsprungartig aus dem Kraftfahrzeug nach außen 5 sich erstreckt, um den Deckel 12 und die entsprechende Dichtung 15 vor direktem Spritzwasser zu schützen.

In Figur 7 ist eine Crashsperre 84 gezeigt, die zwischen einer Ruheposition 85 und einer aktiven Position 86 bewegbar ist. In der Regel befindet sich die Crashsperre 84 in der Ruheposition 85, so dass der Schlitten 11 in seine jeweiligen Positionen 1, 2, 3 verfahren werden kann. Bei einem Unfall können Beschleunigungskräfte auf das Kraftfahrzeug, insbesondere die Kameravorrichtung 10 wirken, so dass ungewollt es zu einer Verschiebung des Schlittens 11 in Richtung Zusatzposition 3 kommen kann. Folglich würde ungewollt der Schalter 16 ausgelöst werden. Um dies zu verhindern, schlägt die Crashsperre 84 aus ihrer Ruheposition 85 in die aktive Position 86 aus und wirkt unmittelbar am Schlitten 11 und zwar derart, dass die Crashsperre 84 in ihrer aktiven Position 86 verhindert, dass der Schlitten 11 in Richtung Zusatzposition 3 verfährt. Gemäß Figur 7 ist exemplarisch die Crashsperre 84 in ihrer aktiven Position 86 gezeigt, wobei die Ausgestaltung der Crashsperre 84 stark schematisiert ist. Selbstverständlich ist es denkbar, dass die Crashsperre 84 anderweitig am Schlitten 11 wirken kann. In der Regel weist die Crashsperre 84 ein Gewicht auf, welches aufgrund der Trägheit schneller in Richtung aktive Position 86 bewegt wird, als es der Schlitten 11 tun würde.

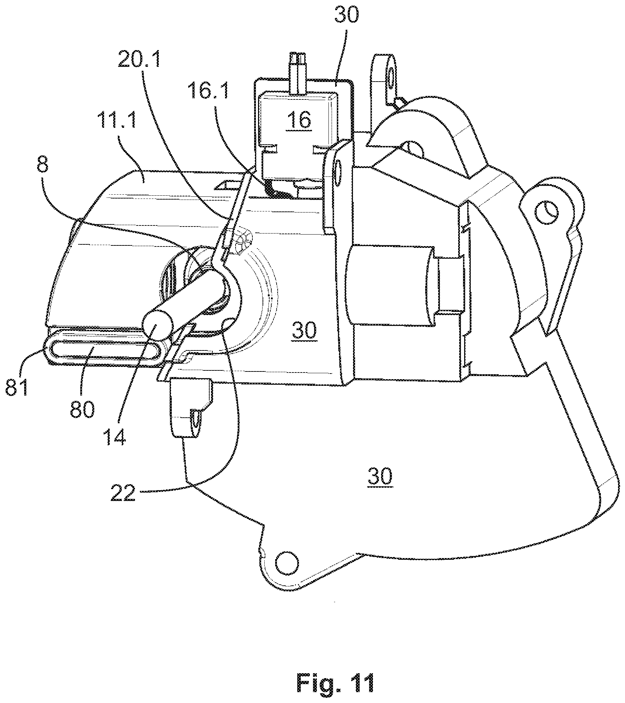

In der Figur 11 ist eine Baugruppe der erfindungsgemäßen Kameravorrichtung 10 von rechts hinten (gesehen aus Richtung des Pfeils 90) dreidimensional dargestellt. Wie gut zu erkennen ist, ragt dabei das Kamerakabel 14 aus der Ausnehmung 22 des Gehäuses 20 heraus. Um die Kamera 4 mit dem Schlitten 11 in dem Gehäuse 20 montieren zu können, ist dieses zweiteilig ausgestaltet. Dabei verläuft die Verbindungslinie 20.1 zwischen dem vorderen Gehäuseteil 21 und dem hinteren Gehäuseteil 30 durch die Ausnehmung 22. In der Figur 11 ist nur das hintere Gehäuseteil 30 dargestellt, welches den Schlitten 11 mit der montierten Kamera 4 aufnimmt. Wie gut zu erkennen ist, weist die Ausnehmung 22 ein ausreichendes Spiel für die Bewegung des Kamerakabels 14 zwischen den Positionen 1 bis 3 auf. Ebenfalls ist deutlich zu erkennen, dass das Schaltelement 16 außenseitig am zweiten Gehäuseteil 30 angeordnet ist, wobei jedoch das Schaltelement 16 innerhalb der Fahrzeugkarosserie angeordnet ist und nicht außerhalb des Fahrzeugs (nicht im Bereich des Bezugszeichens 5) selbst. Auch ist gut zu erkennen, dass das Betätigungselement 16.1 von der Außenseite des Gehäuses 20 in einen Innenbereich des Gehäuses 20 hineinragt, um mit dem Schlitten 11, insbesondere dem Auslöseelement 11.6 bei Erreichen der Zusatzposition 3 mechanisch zusammenwirken zu können.

In der Figur 4 ist ein Ausschnitt des vorderen Gehäuseteils 21 mit der Ausnehmung 22 dargestellt. Wie gut zu erkennen ist, ist im Bereich der Ausnehmung 22 eine Nut angeordnet, die zur (abdichtenden) Aufnahme einer trichterförmigen Abdeckung bzw. Tülle 26 für das Kamerakabel 14 vorgesehen ist. Die entsprechende trichterförmige Tülle 26 ist in der Figur 5 dargestellt, durch die das Kamerakabel 14 ins Innere des Gehäuses 20 durchgeführt wird.

Wie in Figur 11 auch zu erkennen ist, ist eine weitere Tülle 8 für das Kamerakabel 14 vorgesehen, wobei diese Tülle 8 zur Abdichtung des Kamerakabels 14 in der Öffnung 11.7 vom Schlitten 11 dient. Der Unterschied zwischen der Tülle 8 und der Tülle 26 besteht darin, dass das Kamerakabel 14 in der Tülle 26 eine Relativbewegung, verursacht durch die Bewegung der Kamera 4, in der Ausnehmung 22 vollzieht, was eben in der Öffnung 11.7 im Schlitten 11 nicht passiert. Aus der Figur 11 wird auch deutlich, dass die Bauraumtiefe der erfindungsgemäßen Kameravorrichtung durch den seitlichen Kabelanschluss 4.4 entsprechend verringert ausgestaltet ist.

In der Figur 12 ist das erste Kameraschlittenteil 11.1 von seiner Innenseite mit einer montierten Kamera 4 dargestellt. Dabei ist die Kamera 4 in einer quader- oder rechteckförmigen Aufnahme 11.9 mechanisch am ersten Schlittenteil 11.1 fixiert. Zusätzlich ist die Kamera 4 durch insgesamt zwei Haltemittel 4.3 form- und/oder kraftschlüssig befestigt. Die Haltemittel 4.3 sind hierbei als Schrauben ausgebildet. Der seitliche Kameraanschluss 4.4 ist in der Figur 12 gut zu erkennen, an den der Stecker 14.1 vom Kamerakabel 14 angeschlossen ist. Um die elektrische Verbindung vor mechanischen Stößen zu schützen, ist zusätzlich ein Rastmittel 14.2 am Stecker 14.1 vorhanden, das zumindest form- und/oder kraftschlüssig mit dem Kabelanschluss 4.4 zusammenwirkt. Wie anhand der Figur 6 zu erkennen ist, sind links- und rechtsseitig neben der Kameralinse 4.1 an dem Kameragehäuse Laschen mit Durchbrüchen 4.6 angeordnet, durch die die Haltemittel 4.3 durchgeführt werden, um die Kamera 4 im ersten Schlittenteil 11.1 zu befestigen. Dabei sind die am Kameragehäuse angeordneten Laschen mit den Durchbrüchen 4.6 nicht auf einer Höhe zur Kameralinse 4.1 angeordnet, wie bereits beschrieben.

Die Figur 13 zeigt, dass zweckmäßigerweise zwischen der Kamera 4 und der Innenseite des ersten Schlittenteils 11.1 eine Dichtung 4.5 angeordnet ist, um die Öffnung 11.10 für die Kameralinse 4.1 möglichst wasserdicht zu verschließen. Auch wird noch einmal die rechteckförmige bzw. quaderförmige Aufnahme 11.9 vom ersten Schlittenteil 11.1 in der Figur 13 deutlich sichtbar. In den Figuren 12 und 13 ist auch eine Schnittlinie 11.14 des Kameraschlittens 11 dargestellt, die durch eine Zusammensetzung der beiden Teile 11.1 und 11.2 gebildet wird. Wie aus Figur 13 weiter erkennbar ist, liegt diese Schnittlinie 11.14 nicht in einer Schnittebene.

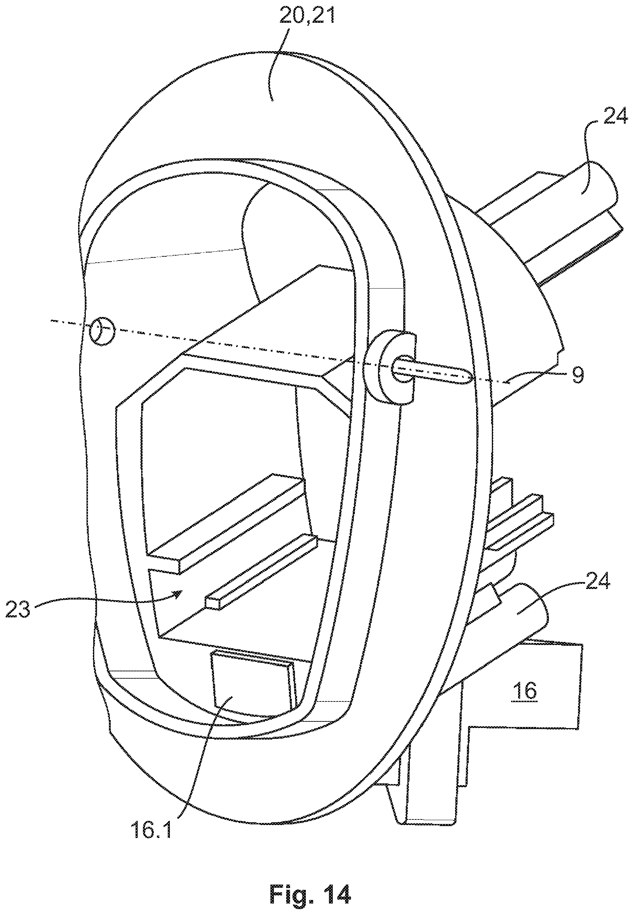

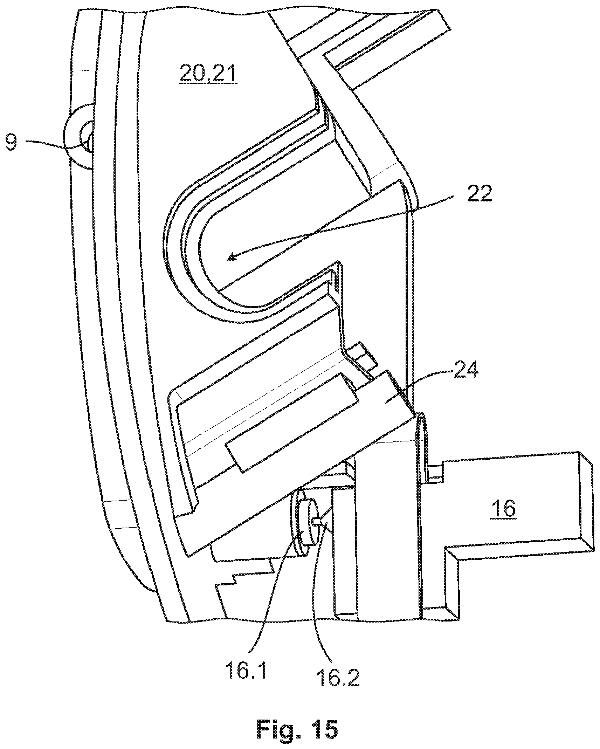

In der Figur 14 ist von außen eine dreidimensionale Ansicht auf das Gehäuse 20, insbesondere das vordere Gehäuseteil 21 der erfindungsgemäßen Kameravorrichtung 10 dargestellt. Dabei ist die Kamera 4 selbst nicht in einer Aufnahme des vorderen Gehäuseteils 21 dargestellt. Genauso fehlt auch der Deckel 12 zur besseren Übersicht. Unter dieser Kameraaufnahme ist jedoch bei einer optionalen Ausgestaltung der Erfindung ein Betätigungsmittel 16.1 in Form eines längsverschieblichen Stößels ausgestaltet. Dieser Stößel ist abgedichtet zu dem Gehäuse 20, so dass kein Spritzwasser durch die Führung ins Gehäuseinnere gelangen kann. Das Betätigungsmittel 16.1 selbst weist außenseitig eine großflächige Betätigungsfläche auf, um ein mechanisches Zusammenwirken mit dem Deckel, insbesondere der Rückseite des Deckels zu erleichtern. Auch ist in der Figur 14 bereits das Schaltelement 16 zu erkennen, welches durch das Betätigungsmittel 16.1 betätigbar ist. Ebenfalls wurde in der Figur 14 sowie auch in der Figur 15 bewusst auf den Deckel 12 in der Darstellung verzichtet, um somit einen Einblick ins Innere des vorderen Gehäuseteils 21 erhalten zu können.

In der weiteren Figur 15 ist das vordere Gehäuseteil 21 aus der Figur 14 in Seitenansicht dargestellt. Hierbei ist einerseits gut die langlochartige Ausnehmung 22 für den seitlichen Kabelanschluss 44 im Gehäuseteil 21 zu erkennen. Außerdem ist die innere Ausgestaltung des Betätigungsmittels 16.1 in Form des längsverschieblichen Stößels gut erkennbar. Dieser drückt durch sein plattenförmiges Ende direkt auf die Schaltspitze 16.2 vom Schaltelement 16. Das Schaltelement 16 ist selbst in einer Aufnahme vom vorderen Gehäuseteil 21 fest angeordnet. Diese Aufnahme ist monolithisch und stoffschlüssig zum vorderen Gehäuseteil 21 ausgestaltet. Zweckmäßigerweise wird diese Aufnahme in einem Fertigungsschritt als ein Kunststoffspritzgussteil mit dem übrigen Gehäuseteil 21 hergestellt. Das Schaltelement 16 kann als Taster, Mikrotaster, Schalter oder dergleichen ausgestaltet sein.

Aufgrund der konkreten Anordnung des Betätigungsmittels 16.1 zur Drehachse 9 vom Deckel 12 entsteht ein Hebelsystem, so dass ein leichter Druck (in Richtung 90) auf den Deckel 12 ausreicht, um das Schaltelement 16 zu betätigen, um ein Signal auszulösen. Bei diesem optional angeordneten Schaltelement 16 muss nicht die Kamera 4 in ihre Zusatzposition 3 bewegt werden. Allerdings ist diese Bewegung der Kamera 4 auch nicht ausgeschlossen. So kann das Schaltelement 16 aus den Figuren 14 und 15 optional zu dem Schaltelement 16 aus den Figuren 1 bis 13 angeordnet sein. Auch kann jeweils nur ein Schaltelement 16, gemeint ist entweder aus den Figuren 1 bis 13 oder den Figuren 14 bis 15, bei der erfindungsgemäßen Ausgestaltung der Kameravorrichtung 10 vorhanden sein.

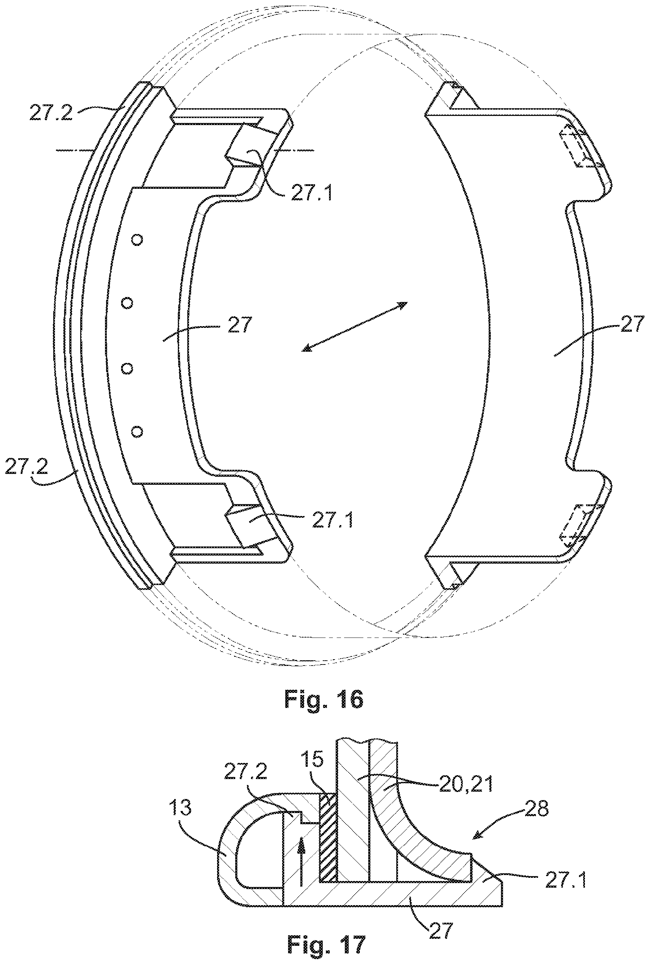

Um den Zierring 13 möglichst auf einfache Art und Weise an der Fahrzeugkarosserie zu befestigen, können zwei ringförmige Halbschalen 27 vorgesehen sein, die von hinten (von der Karosserie weg) und innen in den Zierring 13 formschlüssig eingreifen, um diesen entweder direkt an der Karosserie oder dem Gehäuse 20 der Kameravorrichtung 10 formschlüssig zu befestigen, siehe Figur 16. Diese Befestigung kann als Rastverbindung 28 vorgesehen sein, die an den ringförmigen Halbschalen 27 als Rastmittel 27.1 oder Clipse ausgestaltet sind. Idealerweise ist jede ringförmige Halbschale 27 mit zumindest einem, vorzugsweise zwei Rastmitteln 27.1 versehen. Um nun den Zierring 13 an der Fahrzeugkarosserie zu befestigen, reicht es aus, wenn beide ringförmigen Halbschalen 27 von hinten, gemeint ist rückseitig, in den Zierring 13 eingreifen und dann diametral auseinander gezogen werden (s. Pfeil in Figur 16), um somit den Zierring 13 formschlüssig zu halten. Hierzu sind an den ringförmigen Halbschalen 27 Vorsprünge, insbesondere in Form von ringförmigen Absätzen 27.2, die formschlüssig mit einem Absatz vom Zierring 13 bei der Verbindung zusammenwirken, vorgesehen. Sobald die beiden ringförmigen Halbschalen 27 formschlüssig von hinten in den Zierring 13 eingreifen, können die beiden Halbschalen 27 über die Rastmittel 27.1 mit der Fahrzeugkarosserie oder aber einem Element der Kameravorrichtung 10, insbesondere dem Gehäuse 20, verbunden werden. Somit ist auf einfache Art und Weise der Zierring 13 von außen an der Fahrzeugkarosserie montierbar. Um den Lack der Karosserie zu schonen, kann zusätzlich eine Dichtung 15 zwischen der Fahrzeugkarosserie und dem Zierring 13 bzw. einem Absatz von den ringförmigen Halbschalen 27 vorgesehen sein.

Die Rastverbindung 28 zwischen einer ringförmigen Halbschale 27 und der erfindungsgemäßen Vorrichtung 10, insbesondere dem vorderen Gehäuseteil 21 vom Gehäuse 20 ist in der Figur 17 gezeigt. Dabei handelt es sich um eine schematische Schnittansicht der Rastverbindung 28 im eingezeichneten Bereich der ringförmigen Halbschale 27 aus Figur 16. Hierbei wird auch deutlich, wie die ringförmige Halbschale 27 mit ihrem ringförmigen Vorsprung 27.2 formschlüssig mit dem Innenring (ringförmige Kante in Richtung zum Mittelpunkt) des Zierrings 13 bei der Montage an der Fahrzeugkarosserie zusammenwirkt.

Um den Zierring 13 von der Fahrzeugkarosserie zu lösen, um z. B. Lackierarbeiten oder Reparaturarbeiten vorzunehmen, braucht nur innenseitig vom Fahrzeug die Rastverbindung 28 aufgelöst werden. Anschließend kann der Zierring 13 mit den beiden ringförmigen Halbschalen 27 von außen von der Fahrzeugkarossiere entfernt werden.

Selbstverständlich ist es auch denkbar, dass der Zierring 13 stoffschlüssig mit der Fahrzeugkarosserie verbindbar ist, wobei jedoch dann eine Reparatur oder Wartungsarbeiten, insbesondere unter dem Zierring 13, kaum realisierbar sind. Auch kann der Zierring 13 kaum zerstörungsfrei bei einer stoffschlüssigen Verbindung mit der Fahrzeugkarosserie entfernt werden.

### Bezugszeichenliste

- 1: Ruheposition / eingefahrene Position
- 2: Aufnahmeposition / ausgefahrene Position
- 3: Zusatzposition
- 4: Kamera
- 4.1: Linse
- 4.2: Buchse
- 4.3: Haltemittel
- 4.4: Kabelanschluss
- 4.5: Dichtung
- 4.6: Durchbruch
- 5: außen
- 6: Rückstellfeder / Feder für 12
- 7: Bewegungsrichtung
- 8: Tülle
- 9: Drehachse von 12
- 10: Kameravorrichtung
- 11: Kameraschlitten, zweiteilig
- 11.1: erstes Teil
- 11.2: zweites Teil
- 11.3: linke Führung
- 11.4: rechte Führung
- 11.5: Halteelement
- 11.6: Auslöseelement
- 11.7: Öffnung für Kabel 14
- 11.8: Vorsprung
- 11.9: Aufnahme
- 11.10: Öffnung für 4.1
- 11.13: Absatz, Stufe
- 11.14: Schnittlinie
- 12: Deckel
- 13: Zierring
- 14: Kamerakabel / Leitung für Kamera
- 14.1: Stecker für 4.4
- 14.2: Rastmittel
- 15: Dichtung
- 16: Schaltelement
- 16.1: Betätigungsmittel, insbesondere Schaltfahne
- 16.2: Schaltspitze
- 17: Schließstellung von 12
- 18: Offenstellung von 12
- 19: Druckelement
- 20: Gehäuse, zweiteilig
- 20.1: Verbindungslinie von 20
- 21: vorderes Gehäuseteil
- 22: Ausnehmung
- 23: Öffnung für 4
- 24: Verbindungselement für 21, 30
- 25: Aufnahme für 40
- 26: Abdeckung, Tülle
- 27: ringförmige Halbschale
- 27.1: Rastmittel / Clips
- 27.2: Vorsprung / ringförmiger Absatz für 13
- 30: hinteres Gehäuseteil
- 31: Feder, Federelement für 4 bzw. 11
- 32: Kammer für 31
- 33: Öffnung in 32
- 34: Führungselement
- 40: Mitnehmer
- 41: Achse
- 42: Befestigungselement
- 43: Ausgleichskontur, Langloch
- 44: Kulissenführung
- 45: erster Bereich
- 46: zweiter Bereich
- 50: Antrieb
- 51: Antriebselement
- 52: Achse
- 53: Nocken
- 80: Aufnahme
- 81: Band, Antriebsband, Gleitpuffer
- 82: Verbindungsmittel, insbesondere oberes und unteres Rastmittel
- 84: Crashsperre
- 85: Ruheposition
- 86: aktive Position
- 90: Druck

## Patentansprüche

1. Kameravorrichtung (10), insbesondere für einen Heckbereich eines Fahrzeuges mit einem Antrieb (50), der über Getriebemittel mit einem Schlitten (11) in Wirkverbindung steht,
wobei der Schlitten (11) eine Kamera (4) mechanisch hält, und
der Schlitten (11) gemeinsam mit der Kamera (4) zumindest zwischen einer Ruheposition (1) und einer Aufnahmeposition (2) entlang einer Bewegungsrichtung (7) durch den Antrieb (50) bewegbar ist, und
einem Gehäuse (20), in dem der Schlitten (11) über zumindest eine Führung (11.3, 11.4) wenigstens teilweise beweglich angeordnet ist, und
einem bewegbaren Deckel (12), wodurch eine Öffnung (23) im Gehäuse (20) in einer Schließstellung des Deckels (12) verschließbar ist, wenn die Kamera (4) ihre Ruheposition (1) einnimmt, und
einem Schaltelement (16), wodurch ein Signal für eine fahrzeugspezifische Funktion auslösbar ist,
**dadurch gekennzeichnet, dass**
in der Schließstellung (17) des Deckels (12) ein manueller Druck (90) auf den Deckel (12) eine Bewegung des Schlittens (11) mit der Kamera (4) verursacht, wodurch diese von ihrer Ruheposition (1) in eine Zusatzposition (3) überführbar ist, und hierdurch das Schaltelement (16) betätigbar ist, um das Signal für eine fahrzeugspezifische Funktion auszulösen.

2. Kameravorrichtung (10) nach Anspruch 1,
**dadurch gekennzeichnet,**
**dass** das Schaltelement (16) am Gehäuse (20) angeordnet ist, und zumindest teilweise in den Verfahrweg des Schlittens (11) hineinragt, wobei der Schlitten (11) ein Auslöseelement (11.6) aufweist, das insbesondere bei einer Bewegung des Schlittens (11) mit Kamera (4) in Richtung (7) einer Zusatzposition (3) das Schaftefement (16) auslöst.

3. Kameravorrichtung (10) nach Anspruch 1 oder 2,
**dadurch gekennzeichnet,**
**dass** das Schaltelement (16) durch einen Taster gebildet ist, der insbesondere eine Schaltfahne als Betätigungsmittel (16.1) aufweist, das beim Auslösevorgang durch das Auslöseelement (11.6) am Schlitten (11) betätigbar ist.

4. Kameravorrichtung (10) nach einem der vorherigen Ansprüche,
**dadurch gekennzeichnet,**
**dass** das Schaltelement (16) außenseitig am Gehäuse (20) befestigt ist und das Betätigungsmittel (16.1) in einen Innenraum des Gehäuses (20) hineinragt, um mit dem Auslöseelement (11.6) am Schlitten (11) beim Auslösevorgang zusammenzuwirken.

5. Kameravorrichtung (10) nach einem der vorhergehenden Ansprüche,
**dadurch gekennzeichnet,**
**dass** das Gehäuse (20) feststehend ist, innerhalb dessen der Schlitten (11) bewegbar ist.

6. Kameravorrichtung (10) nach einem der vorherigen Ansprüche,
**dadurch gekennzeichnet,**
**dass** der Schlitten (11) zumindest zweiteilig, insbesondere mit einem ersten (11.1) und einem zweiten Schlittenteil (11.2) ausgebildet ist,
und insbesondere der Schlitten (11) eine Umhüllung für die Kamera (4) darstellt, wobei in der Umhüllung zumindest Öffnungen (11.10, 11,7) für eine Linse (4.1) der Kamera (4) und das Kamerakabel (14) vorhanden sind.

7. Kameravorrichtung (10) nach einem der vorherigen Ansprüche,
**dadurch gekennzeichnet,**
**dass** zwischen Kamera (4) und Schlitten (11) Dichtelemente (4.5) angeordnet sind, wodurch die Kamera (4) insbesondere wasserdicht umhüllt ist.

8. Kameravorrichtung (10) nach einem der vorherigen Ansprüche,
**dadurch gekennzeichnet,**
**dass** die Kamera (4) über zumindest ein Haltemittel (4.3) an dem Schlitten (11) befestigt ist, wobei bevorzugt zumindest zwei Haltemittel (4.3) vorgesehen sind, die insbesondere auf unterschiedlichen Höhen angeordnet sind.

9. Kameravorrichtung (10) nach einem der vorherigen Ansprüche,
**dadurch gekennzeichnet,**
**dass** die Schlittenteile (11) über Verbindungsmittel (82), insbesondere Rastverbindungen, miteinander verbunden sind, wobei insbesondere die Verbindungsmittel (82) oberhalb und unterhalb des Kameraanschlusses (4.4) angeordnet sind.

10. Kameravorrichtung (10) nach einem der vorherigen Ansprüche,
**dadurch gekennzeichnet,**
**dass** die verbundenen Schlittenteile (11.1, 11.2) eine geschlossene Schnittlinie (11.14) bilden,
wobei insbesondere die Schnittlinie (11.14) im Bereich der Öffnung (11.7) für den Kameraanschluss (4.4) verläuft, und wobei insbesondere die Schnittlinie (11.14) gestuft ausgestaltet ist, um eine Labyrinthdichtung zu bilden.

11. Kameravorrichtung (10) nach einem der vorherigen Ansprüche,
**dadurch gekennzeichnet,**
**dass** das Kamerakabel (14) über einen Stecker (14.1) insbesondere mit Rastmitteln (14.2) mit der Kamera (4) verbindbar ist.

12. Kameravorrichtung (10) nach einem der vorherigen Ansprüche,
**dadurch gekennzeichnet,**
**dass** das Kamerakabel (14) durch eine Tülle (8) durch die Öffnung (11.7) im Schlitten (11) zur Kamera (4) führbar ist, wobei insbesondere die Tülle (8) als Knickschutztülle, Dichtungstülle und/oder Zugentlastung ausgestaltet ist.

13. Kameravorrichtung (10) nach einem der vorherigen Ansprüche,
**dadurch gekennzeichnet,**
**dass** der Schlitten (11) mit der Kamera (4) ausschließlich eine lineare Bewegungsrichtung (7) aufweist.

14. Kameravorrichtung (10) nach einem der vorherigen Ansprüche,
**dadurch gekennzeichnet,**
**dass** der Schlitten (11) über zwei Führungen (11.3, 11.4) am Gehäuse (20) beweglich gelagert ist, wobei insbesondere die beiden Führungen (11.3, 11.4) im unteren Bereich seitlich am Schlitten (11) angeordnet sind, und
wobei insbesondere die beiden Führungen (11.3, 11.4) am Schlitten (11) stegförmige Führungsmittel aufweisen, die vorzugsweise mit Bändern (81) oder Gleitpuffern (81) versehen sind.

15. Kameravorrichtung (10) nach einem der vorherigen Ansprüche,
**dadurch gekennzeichnet,**
**dass** das Gehäuse (20) zumindest zweiteilig ausgeführt ist, wobei insbesondere ein vorderes Gehäuseteil (21) und ein hinteres Gehäuseteil (30) das Gehäuse (20) bilden, wobei insbesondere das vordere Gehäuseteil (21) der Aufnahmeposition (2) zugewandt ist und das hintere Gehäuseteil (30) der Ruheposition (1) zugewandt ist.

16. Kameravorrichtung (10) nach einem der vorherigen Ansprüche,
**dadurch gekennzeichnet,**
**dass** das Gehäuse (20) eine Ausnehmung (22) aufweist, durch die das Kamerakabel (14) verläuft, wobei die Ausnehmung (22) derart ausgebildet ist, dass eine Relativbewegung des Kamerakabels (14) innerhalb der Ausnehmung (22) ermöglicht ist.

17. Kameravorrichtung (10) nach einem der vorherigen Ansprüche,
**dadurch gekennzeichnet,**
**dass** die Ausnehmung (22) im Bereich einer Verbindungslinie (20.1) zwischen dem vorderen (21) und dem hinteren Gehäuseteil (30) angeordnet ist, wobei insbesondere die Ausnehmung (22) vollständig oder teilweise durch eine Zusatztülle (9) verschließbar ist, und das Kamerakabel (14) durch die Zusatztülle (26) in das Gehäuse (20) hineinführbar ist.

18. Kameravorrichtung (10) nach einem der vorherigen Ansprüche,
**dadurch gekennzeichnet,**
**dass** der Schlitten (11) in eine über die Ruheposition (1) hinausgehende Zusatzposition (3) überführbar ist,
wobei insbesondere die Zusatzposition (3) ausschließlich antriebsfrei erreichbar ist.

19. Kameravorrichtung (10) nach einem der vorherigen Ansprüche,
**dadurch gekennzeichnet,**
**dass** der Deckel (12) ausschließlich an dem vorderen Gehäuseteil (21) befestigt ist, wobei insbesondere eine feste Drehachse (9) als Verbindungselement dient, und wobei insbesondere zumindest eine Rückstellfeder (6) für den Deckel (12) vorhanden ist, um den Deckel (12) von einer Offenstellung (18) in eine Schließstellung (17) zu überführen.

20. Kameravorrichtung (10) nach einem der vorherigen Ansprüche,
**dadurch gekennzeichnet,**
**dass** zwischen dem vorderen Gehäuseteil (21) und dem Deckel (12) ein Dichtungselement (15) insbesondere mit einer Ausbuchtung, Einkerbung und/oder Hohlkammer vorhanden ist, um eine einfache Stauchung des Dichtungselements (15) durch einen Druck (90) auf den anliegende Deckel (12) zu ermöglichen.

21. Kameravorrichtung (10) nach einem der vorherigen Ansprüche,
**dadurch gekennzeichnet,**
**dass** über eine Bewegung der Kamera (4) aus der Ruheposition (1) in Richtung Zusatzposition (3) ein Signal auslösbar ist, insbesondere eine fahrzeugspezifische Funktion auslösbar ist, wobei
insbesondere ein manueller Druck (90) auf den Deckel (12) erforderlich ist, um hierdurch den Schlitten (11) aus der Ruheposition (1) in die Zusatzposition (3) zu bewegen.

22. Kameravorrichtung (10) nach einem der vorherigen Ansprüche,
**dadurch gekennzeichnet,**
**dass** der Deckel (12) ausschließlich von der Kamera (4) und/oder dem Schlitten (11) bei einem Wechsel von der Ruheposition (1) in die Aufnahmeposition (2) betätigbar ist.

23. Kameravorrichtung (10) nach einem der vorherigen Ansprüche,
**dadurch gekennzeichnet,**
**dass** der Antrieb (50) und/oder zumindest ein Getriebemittel seitlich neben dem Gehäuse (20) für den Schlitten (11) angeordnet ist,
wobei insbesondere das Getriebemittel zwischen Antrieb (50) und dem Schlitten (11) vorgesehen ist.

## Claims

1. A camera apparatus (10), in particular for a rear area of a vehicle, comprising a drive (50) which is in operative connection with a carriage (11) via gear means,
wherein the carriage (11) holds a camera (4) mechanically, and
the carriage (11) together with the camera (4) can be moved at least between a rest position (1) and a recording position (2) along a movement direction (7) by the drive (50), and
a housing (20), in which the carriage (11) is arranged at least partially movably via at least one guide (11.3, 11.4), and
a movable cover (12), whereby an opening (23) in the housing (20) ca be locked in a closed position of the cover (12) when the camera (4) occupies its rest position (1), and
a switching element (16), whereby a signal for a vehicle-specific function can be triggered,
**characterised in that**
in the closed position (17) of the cover (12), a manual pressure (90) on the cover (12) causes a movement of the carriage (11) with the camera (4), this can be transferred from its rest position (1) into an additional position (3), and the switching element (16) can be operated thereby to trigger the signal for a vehicle-specific function.

2. The camera apparatus (10) according to claim 1,
**characterised in that**
the switching element (16) is arranged on the housing (20), and at least partially protrudes into the travel path of the carriage (11), wherein said carriage (11) comprises a trigger element (11.6), which particularly triggers the switching element (16) when the carriage (11) with camera (4) moves in the direction (7) of an additional position (3) .

3. The camera apparatus (10) according to claim 1 or 2,
**characterised in that**
the switching element (16) is formed by a pushbutton which in particular has a cam switch as the actuating means (16.1), which can be actuated on the carriage (11) as a result of the release operation by the trigger element (11.6).

4. The camera apparatus (10) according to any one of the preceding claims,
**characterised in that**
the switching element (16) is fastened to the outside of the housing (20), and the actuating means (16.1) projects into an interior space of the housing (20) to cooperate with the trigger element (11.6) on the carriage (11) during a release operation.

5. The camera apparatus (10) according to any one of the preceding claims,
**characterised in that**
the housing (20) is immovable, while the carriage (11) is movable therein.

6. The camera apparatus (10) according to any one of the preceding claims,
**characterised in that**
the carriage (11) consists of at least two parts, particularly with a first (11.1) and a second carriage part (11.2),
and in particular the carriage (11) constitutes a covering for the camera (4), wherein at least openings (11.10, 11.7) are present in the covering for a lens (4.1) of the camera (4) and the camera cable (14).

7. The camera apparatus (10) according to any one of the preceding claims,
**characterised in that**
sealing elements (4.5) are arranged between the camera (4) and the carriage (11), whereby the camera (4) in particular is enclosed in a waterproof covering.

8. The camera apparatus (10) according to any one of the preceding claims,
**characterised in that**
the camera (4) s fastened to the carriage (11) via at least one holding means (4.3), wherein preferably at least two holding means (4.3) are provided, which are particularly arranged at different heights.

9. The camera apparatus (10) according to any one of the preceding claims,
**characterised in that**
the carriage parts (11) are connected to each other via connecting means (82), particularly snap-on connections, wherein in particular the connecting means (82) are arranged above and below the camera port (4.4).

10. The camera apparatus (10) according to any one of the preceding claims,
**characterised in that**
that the connected carriage parts (11.1, 11.2) form a closed intersection line (11.14),
wherein in particular the intersection line (11.14) extends in the area of the opening (11.7) for the camera port (4.4), and wherein in particular, the intersection line (11.14) is stepped to form a labyrinth seal.

11. The camera apparatus (10) according to any one of the preceding claims,
**characterised in that**
the camera cable (14) is connectable to the camera (4) via a plug (14.1), in particular with snap-on means (4.2).

12. Camera apparatus (10) according to any one of the preceding claims,
**characterised in that**
the camera cable (14) can be passed through a sleeve (8) through the opening (11.7) in the carriage (11) to the camera (4), wherein in particular the sleeve (8) is designed as an anti-kink sleeve, sealing grommet and/or strain relief.

13. The camera apparatus (10) according to any one of the preceding claims,
**characterised in that**
the carriage (11) with the camera (4) has an exclusively linear movement direction (7).

14. The camera apparatus (10) according to any one of the preceding claims,
**characterised in that**
the carriage (11) is mounted on the housing (20) so as to be movable via two guides (11.3, 11.4), wherein in particular the two guides (11.3, 11.4) are arranged in the lower area on the sides of the carriage (11), and
wherein in particular the two guides (11.3, 11.4) on the carriage (11) have strut-like guide means, which are preferably furnished with strips (81) or sliding buffers (81).

15. The camera apparatus (10) according to any one of the preceding claims,
**characterised in that**
the housing (20) is made in at least two parts, wherein the housing (20) is formed in particular by a front housing part (21) and a rear housing part (30),
wherein in particular the front housing part (21) is closest to the recording position (2) and the rear housing part (30) is closest to the rest position (1) .

16. The camera apparatus (10) according to any one of the preceding claims,
**characterised in that**
the housing (20) has a recess (22) through which the camera cable (14) extends, wherein said recess (22) is designed such that a relative movement of the camera cable (14) inside the recess (22) is enabled.

17. The camera apparatus (10) according to any one of the preceding claims,
**characterised in that**
the recess (22) is arranged in the region of a connecting line (20.1) between the front (21) and the rear housing part (30), wherein
in particular the recess (22) is completely or partially closable by an auxiliary sleeve (9), and the camera cable (14) can be passed through the auxiliary sleeve (26) into the housing (20).

18. The camera apparatus (10) according to any one of the preceding claims,
**characterised in that**
the carriage (11) can be moved into an additional position (3) beyond the rest position (1),
wherein in particular the additional position (3) is accessible exclusively without a drive.

19. The camera apparatus (10) according to any one of the preceding claims,
**characterised in that**
that the cover (12) is fastened exclusively to the front housing part (21), wherein in particular a fixed axis of rotation (9) serves as the connection element, and
wherein in particular at least one return spring (6) is provided for the cover (12) to move the cover (12) from an open position (18) to a closed position (17).

20. The camera apparatus (10) according to any one of the preceding claims,
**characterised in that**
a sealing element (15) particularly with a protrusion, notch and/or hollow chamber is provided between the front housing part (21) and the cover (12) to enable easy compression of the sealing element (15) by a pressure (90) on the cover (12) resting thereon.

21. The camera apparatus (10) according to any one of the preceding claims,
**characterised in that**
a signal can be triggered by a movement of the camera (4) from the rest position (1) in the direction of additional position (3), in particular a vehicle-specific function can be triggered wherein
particularly a manual pressure (90) on the cover (12) is required to thereby move the carriage (11) from the rest position (1) to the additional position (3).

22. The camera apparatus (10) according to any one of the preceding claims,
**characterised in that**
the cover (12) is operable exclusively by the camera (4) and/or the carriage (11) during a change from the rest position (1) to the recording position (2).

23. The camera apparatus (10) according to any one of the preceding claims,
**characterised in that**
the drive (50) and/or at least one gear means is arranged laterally beside the housing (20) for the carriage (11),
wherein in particular the gear means is provided between the drive (50) and the carriage (11).

## Revendications

1. Dispositif de caméra (10), en particulier pour une partie arrière d'un véhicule, comportant une commande (50) qui coopère avec un chariot (11) par l'intermédiaire de moyens de transmission,
le chariot (11) maintenant une caméra (4) mécaniquement, et
le chariot (11) étant mobile en commun avec la caméra (4) du moins entre une position de repos (1) et une position de prise de vue (2) dans un sens de mouvement (7) grâce à la commande (50) et
un boîtier (20), dans lequel le chariot (11 est disposé du moins partiellement de manière mobile par le biais d'au moins un guide (11.3, 11.4), et
un couvercle mobile (12) à travers lequel une ouverture (23) du boîtier (20) peut être fermée dans une position de fermeture du couvercle (12) lorsque la caméra (4) prend sa position de repos (1), et
un élément de commutation (16) par lequel un signal peut être déclenché pour une fonction spécifique au véhicule,
**caractérisé en ce que**,
dans la position de fermeture (17) du couvercle (12), une pression manuelle (90) exercée sur le couvercle (12) provoque un mouvement du chariot (11) avec la caméra (4), ce qui a pour effet que celle-ci peut être passée de sa position de repos (1) dans une position supplémentaire (3) et que l'élément de commutation (16) est ainsi actionnable pour déclencher le signal pour une fonction spécifique au véhicule.

2. Dispositif de caméra (10) selon la revendication 1,
**caractérisé en ce que**
l'élément de commutation (16) est disposé u niveau du boîtier (20) et dépasse au moins partiellement dans la trajectoire du chariot (11), le chariot (11) présentant un élément de déclenchement (11. 6) qui, en particulier lors d'un mouvement du chariot (11) avec la caméra (4) en direction (7) d'une position supplémentaire (3) déclenche l'élément de commutation (16).

3. Dispositif de caméra (10) selon la revendication 1 ou 2,
**caractérisé en ce que**
l'élément de commutation (16) est constitué par une douche qui présente en particulier une plaque de commutation faisant office d'élément d'actionnement (16.1) qui est actionnable lors de l'opération de déclenchement par l'élément de déclenchement (11.6) au niveau du chariot (11).

4. Dispositif de caméra (10) selon une des revendications précédentes,
**caractérisé en ce que**
l'élément de commutation (16) est fixé sur l'extérieur du boîtier (20) et que le moyen d'actionnement (16.1) dépasse dans un espace intérieur du boîtier (20) afin de coopérer avec l'élément de déclenchement (11.6) au niveau du chariot (11) lors de l'opération de déclenchement.

5. Dispositif de caméra (10) selon une des revendications précédentes,
**caractérisé en ce que**
le boîtier (20) à l'intérieur duquel le chariot (11) est mobile est fixe.

6. Dispositif de caméra (10) selon une des revendications précédentes,
**caractérisé en ce que**
le chariot (11) est réalisé en au moins deux pièces, en particulier avec une première (11.1) et une deuxième pièce de chariot (11.2),
et que le chariot (11) constitue en particulier une enveloppe pour la caméra (4), au moins des ouvertures (11.10, 11,7) pour une lentille (4.1) de la caméra (4) et le câble de la caméra (14) étant pratiquées dans l'enveloppe.

7. Dispositif de caméra (10) selon une des revendications précédentes,
**caractérisé en ce que**,
entre la caméra (4) et le chariot (11), sont disposés des éléments d'étanchéité (4.5), ce qui a pour effet que la caméra (4) est en particulier enveloppée de manière étanche à l'eau.

8. Dispositif de caméra (10) selon une des revendications précédentes,
**caractérisé en ce que**
la caméra (4) est fixée par au moins un élément de retenue (4.3) au chariot (11), étant prévus de préférence au moins deux moyens de retenue (4.3) qui sont disposés en particulier à des hauteurs différentes.

9. Dispositif de caméra (10) selon une des revendications précédentes,
**caractérisé en ce que**
les pièces du chariot (11) sont reliées entre elles par des moyens de raccordement (82), en particulier des raccords à déclic, les moyens de raccordement (82) étant en particulier disposés au-dessus et en-dessous du raccord de la caméra (4.4) .

10. Dispositif de caméra (10) selon une des revendications précédentes,
**caractérisé en ce que**
les pièces de chariot raccordées (11.1, 11.2) forment une ligne de coupe fermée (11.14),
la ligne de coupe (11.14) s'étendant en particulier au niveau de l'ouverture (11.7) pour le raccord de caméra (4.4) et la ligne de coupe (11.14) étant en particulier échelonnée pour former un joint labyrinthe.

11. Dispositif de caméra (10) selon une des revendications précédentes,
**caractérisé en ce que**
le câble de la caméra (14) peut être raccordé par une prise (14.1) dotée en particulier de moyens d'enclenchement (14.2) à la caméra (4).

12. Dispositif de caméra (10) selon une des revendications précédentes,
**caractérisé en ce que**
le câble de la caméra (14) peut être conduit par un manchon (8) à travers l'ouverture (11.7) du chariot (11) jusqu'à la caméra (4), le manchon (8) se présentant en particulier sous forme d'un manchon anti-pliage, d'un manchon d'étanchéité et/ou d'un système de décharge de traction.

13. Dispositif de caméra (10) selon une des revendications précédentes,
**caractérisé en ce que**
le chariot (11) portant la caméra (4) présente exclusivement un sens de mouvement linéaire (7).

14. Dispositif de caméra (10) selon une des revendications précédentes,
**caractérisé en ce que**
le chariot (11) s'appuie par deux guides (11.3, 11.4) de manière mobile au niveau du boîtier (20), les deux guides (11.3, 11.4) étant en particulier disposés dans la partie inférieure latérale au niveau du chariot (11) et
les deux guides présentant en particulier (11.3, 11.4) au niveau du chariot (11) des moyens de guidage en forme de traverses qui sont pourvus de préférence de bandes (81) ou de tampons de glissement (81) .

15. Dispositif de caméra (10) selon une des revendications précédentes,
**caractérisé en ce que**
le boîtier (20) est réalisé en au moins deux pièces, une partie avant du boîtier (21) et une partie arrière du boîtier (30) formant en particulier le boîtier (20), la partie avant du boîtier (21) étant en particulier tournée vers la position de prise de vue (2) et la partie arrière du boîtier (30) vers la position de repos (1).

16. Dispositif de caméra (10) selon une des revendications précédentes,
**caractérisé en ce que**
le boîtier (20) présente une échancrure (22) à travers laquelle s'étend le câble de la caméra (14), l'échancrure (22) étant réalisée de manière à ce qu'un mouvement relatif du câble de la caméra (14) dans l'échancrure (22) soit possible.

17. Dispositif de caméra (10) selon une des revendications précédentes,
**caractérisé en ce que**
l'échancrure (22) est disposée au niveau d'une de liaison (20.1) entre la partie avant (21) et la partie arrière du boîtier (30),
l'échancrure (22) pouvant en particulier être fermée totalement ou partiellement par un manchon supplémentaire (9) et le câble de la caméra (14) pouvant être rentré dans le boîtier (20) par le manchon supplémentaire (26).

18. Dispositif de caméra (10) selon une des revendications précédentes,
**caractérisé en ce que**
le chariot (11) peut être passé dans une position supplémentaire (3) allant au-delà de la position de repos (1),
la position supplémentaire (3) pouvant en particulier être atteinte exclusivement sans entraînement.

19. Dispositif de caméra (10) selon une des revendications précédentes,
**caractérisé en ce que**
le couvercle (12) est fixé exclusivement à la partie avant du boîtier (21), un axe de rotation fixe (9) servant en particulier d'élément de raccordement et un ressort de rappel (6) étant particulier présent pour le couvercle (12) afin de passer le couvercle (12) d'une position d'ouverture (18) à une position de fermeture (17).

20. Dispositif de caméra (10) selon une des revendications précédentes,
**caractérisé en ce que**,
entre la pièce avant du boîtier (21) et le couvercle (12), il est prévu un élément d'étanchéité (15) doté en particulier d'un bombement, d'une entaille et/ou d'une cavité afin de permettre un refoulement simple de l'élément d'étanchéité (15) par une pression (90) exercée sur le couvercle posé dessus (12).

21. Dispositif de caméra (10) selon une des revendications précédentes,
**caractérisé en ce**
**qu'**un signal, en particulier une fonction spécifique aux véhicules, peut être déclenché par un mouvement de la caméra (4) de la position de repos (1) vers la position supplémentaire (3),
une pression manuelle (90) sur le couvercle (12) étant en particulier nécessaire pour passer ainsi le chariot (11) de la position de repos (1) à la position supplémentaire (3).

22. Dispositif de caméra (10) selon une des revendications précédentes,
**caractérisé en ce que**
le couvercle (12) set actionnable exclusivement par la caméra (4) et/ou le chariot (11) en cas de passage de la position de repos (1) à la position de prise de vue (2).

23. Dispositif de caméra (10) selon une des revendications précédentes,
**caractérisé en ce que**,
la commande (50) et/ou au moins un moyen de transmission est disposé latéralement près du boîtier (20) du chariot (11),
le moyen de transmission étant en particulier prévu entre la commande (50) et le chariot (11).
